# EUROPÄISCHE PATENTSCHRIFT

(11) **EP 3 847 333 B1**
(45) Veröffentlichungstag und Bekanntmachung des Hinweises auf die Patenterteilung: **27.03.2024**
(21) Anmeldenummer: 19762378.8
(22) Anmeldetag: 02.09.2019
(51) Int. Cl.: E05F 15/73, B66F 9/06, B66F 9/075, B66F 17/00, G08G 1/16

(54) **TORSICHERHEITSSYSTEM ZUM VERHINDERN VON KOLLISIONEN ZWISCHEN EINEM FAHRZEUG UND EINEM TOR**
GATE SAFETY SYSTEM FOR PREVENTING COLLISIONS BETWEEN A VEHICLE AND A GATE
SYSTÈME DE SÉCURITÉ DE PORTE SERVANT À EMPÊCHER DES COLLISIONS ENTRE UN VÉHICULE ET UNE PORTE

(30) Priorität: 04.09.2018 DE 202018105041 U
(43) Veröffentlichungstag der Anmeldung: 14.07.2021
(73) Patentinhaber: comnovo GmbH, 44227 Dortmund (DE)
(72) Erfinder: LAMMERING, David, 44227 Dortmund (DE); LEWANDOWSKI, Andreas, 44227 Dortmund (DE); WINKLER, Ron, 44227 Dortmund (DE)
(74) Vertreter: Eisenführ Speiser
(86) Internationale Anmeldenummer: PCT/EP2019/073346
(87) Internationale Veröffentlichungsnummer: WO 2020/048919

(56) Entgegenhaltungen:
- WO-A1-2016/203103
- DE-U1-202005 003 366
- US-A1- 2004 075 046
- US-A1- 2017 057 798
- US-B2- 7 859 390

## Beschreibung

Die Erfindung betrifft ein Torsicherheitssystem zum Verhindern von Kollisionen zwischen einem Fahrzeug und einem Tor, ein Verfahren und ein Computerprogramm.

Systeme dieser Art sind in verschiedener Ausführung im Stand der Technik bekannt und werden insbesondere dazu eingesetzt eine Kollision zwischen einem Stapler und einem Rolltor in einer Lager- oder Fertigungshalle zu verhindern.

US 4 849 735 beschreibt beispielsweise ein funkgesteuertes Sicherheitssystem für Gabelstapler, mit dessen Hilfe vermieden werden soll, dass der Gabelstapler gegen ein geschlossenes Tor fährt. Zu diesem Zweck werden von einem oberhalb des Tors angebrachten Transmitter Funksignale ausgestrahlt, die fahrzeugseitig empfangen werden. Dabei wird nach Erreichen einer bestimmten ersten Entfernung zum Tor ein Alarmsignal generiert und bei Erreichen einer zweiten, kürzeren Entfernung der Gabelstapler stillgesetzt.

Aus WO 96/40533 A1 ist eine Einrichtung zum Stillsetzen eines Gabelstaplers bekannt, der sich zu nahe oder zu schnell einem kraftbetätigten Tor annähert, das noch nicht vollständig geöffnet ist. Hierbei ist ein Anwesenheitssensor vorgesehen, der eine Radareinrichtung oder einen anderen üblichen Sensor enthalten kann, die Anwesenheit bzw. Distanz sowie die Geschwindigkeit eines Gabelstaplers detektieren kann und oberhalb des Tors angeordnet ist. Ein auf Signale des Anwesenheitssensors und auf Signale von Endschaltern des Tors reagierendes Steuergerät steuert den Betrieb des Tors und eines Transmitters. Wird ein Gabelstapler in einer ersten, zum Tor entfernteren Zone detektiert, dann wird vom Steuergerät abhängig vom bereits erreichten Öffnungsgrad des Tors ggf. eine erhöhte Öffnungsgeschwindigkeit des Tors eingestellt. Befindet sich der Gabelstapler in einer zweiten, zum sich öffnenden Tor näheren Zone, dann wird abhängig vom Öffnungsgrad ein Signal von der Übertragungseinheit an den Gabelstapler gesendet und dieser ggf. stillgesetzt, entweder durch Unterbrechung der Kraftstoffzufuhr oder durch Eingriff in die Bremsen.

Dieses System ist also darauf angewiesen, den Stapler zu erkennen. Hierzu sind Systeme erforderlich, die aus den Radarsignalen den Stapler identifizieren können. Auch ist eine Sichtachse vom Radarsensor zum Stapler erforderlich. Wir der Stapler abgeschirmt, kann es hingegen zu Problemen kommen.

DE 20 2005 003 366 U1 ist inhaltlich mit US 4 849 735 vergleichbar, wobei in einem ersten Raumbereich die Fahrzeuggeschwindigkeit zwangsweise herabgesetzt wird, ggf. bis auf Schleichgeschwindigkeit.

In EP 1 767 488 A1 wird ein Fahrerassistenzsystem gelehrt, mit dem eine Verringerung von Schäden an Gebäudeeinrichtungen, zum Beispiel Rolltoren, erzielt werden soll. Das Fahrerassistenzsystem arbeitet mit einem über dem Tor angebrachten Transponder, der bei Annäherung an das Tor UHF-Signale an den Gabelstapler abgibt. Hierbei werden Daten z.B. in Bezug auf maximale Hubhöhe, maximale Geschwindigkeit, Stoppfunktion usw. übermittelt. Die empfangenen Daten werden im Gabelstapler mit aktuellen Daten verglichen und bei Datenüberschreitung eine Anzeige generiert, also beispielsweise in Bezug auf die Höchstgeschwindigkeit und/oder die maximale Hubhöhe im Torbereich.

Das Assistenzsystem soll dem Fahrer zusätzliche Informationen zur Verfügung stellen, ohne ihm die volle Verantwortung und Kontrolle des Flurförderzeugs zu nehmen. Allerdings sei es auch denkbar, zum Beispiel aktiv in die Geschwindigkeitsregelung des Fahrzeugs oder in sonstige Funktionen einzugreifen.

US 7 859 390 B2 beschreibt ein System, bei dem die Entfernungen zwischen einem bei Annäherung von Gabelstaplern automatisch öffnenden Tor und den Gabelstaplern durch Laufzeitmessungen von akustischen Signalen ermittelt und ggf. Warnungen erzeugt und optional die Gabelstapler abgebremst werden. Zu diesem Zweck ist oberhalb des Tors eine Abfrageeinheit angeordnet, die mit einem Transponder am jeweiligen Gabelstapler mittels Wellensender und -empfänger kommuniziert und bei Annäherung des Gabelstaplers ein akustisches Signal des Transponders auslöst, um über eine Laufzeitmessung die Entfernung bestimmen zu können. Der Gabelstapler kann sodann abhängig von der ermittelten Entfernung zwecks Kollisionsvermeidung abgebremst werden.

Diese internationale Patentanmeldung WO 2016/203103 A1 offenbart ein Sicherheitssystem mit einer Fahrzeugkennung für beispielweise Gabelstapler und einer Personenkennung, die jeweils zur gegenseitigen Funkkommunikation und zur Abgabe von Alarmsignalen fähig sind, die abhängig von ermittelten Entfernungen ausgelöst werden. In einer Ausführung wird bei Annäherung des Gabelstaplers an ein mit einem Sensor versehenes Tor ab einer bestimmten Entfernung das Tor automatisch geöffnet.

Weiterhin sind Systeme bekannt, die in erster Linie auf eine Kollisionsvermeidung zwischen Mensch und Stapler ausgelegt sind. Ein solches System ist grundsätzlich aus WO 2011/151291 A1 bekannt. Dort ist ein Annährungswarnsystem zur Erkennung der Annäherung beweglicher Objekte, insbesondere von Personen an ein Fahrzeug mit einem solchen Annährungswarnsystem offenbart.

Weiterhin ist von der hiesigen Anmelderin aus WO 2018/015315 A1 ein System bekannt, zum Warnen von Personen im Verkehr, mit einer Antenneneinheit mit wenigstens einer ersten Antenne, einer zweiten Antenne und einer dritten Antenne, die dazu ausgebildet sind, beabstandet voneinander und in einer vorbestimmten räumlichen Beziehung zueinander an vorbestimmten Positionen an einem zu sichernden Fahrzeug montiert zu werden und jeweils ein elektromagnetisches Feld erzeugen; und einer mit der Antenneneinheit verbundenen Steuereinheit, die dazu ausgebildet ist, eine Warnzone für das Fahrzeug zu definieren, und mittels der Antenneneinheit zu bestimmen, ob sich ein auf die Antenneneinheit abgestimmtes Warnmodul innerhalb der Warnzone befindet. Ein entsprechendes Warnmodul ist vorgesehen, das auf die Antenneneinheit der Fahrzeugsicherheitsvorrichtung abgestimmt ist und von einer Person getragen wird. Das Warnmodul weist eine Steuereinheit und eine Antenne auf, die mit der Antenneneinheit der Fahrzeugsicherheitsvorrichtung kooperiert und wobei das Warnmodul dazu ausgebildet ist, ein Signal zu empfangen und ein Warnsignal auszugeben, wenn bestimmt wird, dass sich das Warnmodul innerhalb der Warnzone befindet.

Ein Problem bei den bekannten Systemen ist entweder, dass sie wie das aus WO 2018/015315 A1 bekannte System nicht für die Anwendung bei Rolltoren geeignet sind, oder, wie bei den anderen bekannten Systemen, keine ausreichende Kommunikation zwischen dem Fahrzeug und dem Tor, bzw. entsprechenden Einrichtungen oder Transpondern, die an dem Fahrzeug oder dem Tor angeordnet sind, stattfindet. So sind manche Systeme beispielsweise darauf angewiesen, den Stapler selbsttätig zu identifizieren und, basierend hierauf, Handlungen vorzunehmen. Andere Systeme ermitteln einen Transponder eines Staplers und öffnen in Antwort darauf beispielsweise das Rolltor. Hierbei kann aber nicht erkannt werden, ob der Stapler tatsächlich durch das Tor fahren wird oder sich nur in der Nähe des Tores befindet. Andere Systeme bremsen den Stapler ab, aber auch unabhängig davon, wo sich dieser befindet, solange er in der Nähe des Tores ist. Manche Systeme umfassen zwar Lenkwinkelsensoren oder dergleichen, aber verwenden diese nur lokal.

Ein besonderes Problem besteht bei Fehlbremsungen oder Fehlöffnungen, also einer fehlerhaften Abbremsung des Staplers, obwohl dieser nicht beabsichtigt durch das Tor zu fahren oder in Richtung des Tores zu fahren oder auch Fehlöffnungen, das heißt Öffnungen von Rolltoren, obwohl ein Stapler nicht auf dieses zufährt. Durch solche Fehlbremsungen oder Fehlöffnungen werden Mitarbeiter irritiert und die Akzeptanz eines Systems sinkt deutlich ab. Es ist also gewünscht, die Akzeptanz solcher Systeme zu erhöhen.

Der Erfindung liegt die Aufgabe zugrunde, ein System bereitzustellen, das gegenüber dem Stand der Technik verbessert ist, und insbesondere eine höhere Sicherheit und Akzeptanz bietet, Fehlwarnungen, Fehlbremsungen oder Fehlöffnungen von Toren weitgehend vermeidet und einfach nachgerüstet werden kann.

Die Erfindung löst die Aufgabe mit einem Torsicherheitssystem gemäß Anspruch 1 mit einem Tormodul, welches eine Tor-Antenneneinheit mit zumindest einer ersten Tor-Antenne aufweist, wobei die Tor-Antenneneinheit dazu ausgebildet ist, in einer vorbestimmten räumlichen Beziehung zu einem Torrahmen des Tores montiert zu werden, und ein erstes dreidimensionales elektromagnetisches Feld erzeugt, das vorzugsweise eine Wellenlänge von 780 nm, vorzugsweise 60 mm oder mehr, vorzugsweise in einem Bereich von etwa 70 mm bis etwa 80 mm, und/oder eine Frequenz in einem Bereich von 3 GHz bis 5 GHz, vorzugsweise 3,5 GHz bis 4,5 GHz, besonders bevorzugt 3,75 GHz bis 4,25 GHz aufweist. Das Tormodul weist ferner eine mit der Tor-Antenneneinheit verbundene Tor-Verarbeitungseinheit auf, welche dazu angepasst ist, wenigstens eine erste Tor-Warnzone für das Tor zu definieren, die einen Teilbereich des ersten elektromagnetischen Feldes darstellt, wobei die Tor-Verarbeitungseinheit dazu angepasst ist, mittels der Tor-Antenneneinheit zu ermitteln, ob sich ein auf die Tor-Antenneneinheit abgestimmtes Fahrzeugmodul innerhalb der ersten Tor-Warnzone befindet. Schließlich weist das Tormodul eine Torschnittstelle zur Verbindung des Tormoduls mit einer Steuerung des Tores auf.

Das Torsicherheitssystem weist ferner ein Fahrzeugmodul auf, welches seinerseits eine Fahrzeugantenneneinheit mit zumindest einer ersten Fahrzeugantenne, welche dazu ausgebildet ist, in einer vorbestimmten räumlichen Beziehung an dem Fahrzeug montiert zu werden, und ein zweites dreidimensionales elektromagnetisches Feld zu erzeugen, das vorzugsweise eine Wellenlänge von 780 nm, vorzugsweise 60 mm oder mehr, vorzugsweise in einem Bereich von etwa 70 mm bis etwa 80 mm, und/oder eine Frequenz in einem Bereich von 3 GHz bis 5 GHz, vorzugsweise 3,5 GHz bis 4,5 GHz, besonders bevorzugt 3,75 GHz bis 4,25 GHz. Ferner weist das Fahrzeugmodul eine mit der Fahrzeugantenneneinheit verbundene Fahrzeug-Verarbeitungseinheit auf, welche dazu angepasst ist, wenigstens eine erste Fahrzeug-Warnzone für das Fahrzeug zu definieren, die einen Teilbereich des zweiten elektromagnetischen Feldes darstellt, wobei die Fahrzeug-Verarbeitungseinheit dazu angepasst ist, mittels der Fahrzeugantenneneinheit zu ermitteln, ob sich das auf die Fahrzeugantenne abgestimmte Tormodul innerhalb der ersten Fahrzeug-Warnzone befindet.

Das System besteht also im Wesentlichen aus zwei Modulen, nämlich einem Tormodul und einem Fahrzeugmodul. Das Tormodul ist dem Tor zugeordnet und das Fahrzeugmodul dem Fahrzeug. Bei dem Tor handelt es sich vorzugsweise um ein Rolltor, wobei auch andere Tore umfasst sein sollen. Das Tormodul weist wenigstens eine Tor-Antenneneinheit und eine Tor-Verarbeitungseinheit auf. Wenigstens die Tor-Antenneneinheit ist benachbart zum Tor, vorzugsweise in der Nähe einer der oberen Ecken, oder in der Mitte des Querbalkens, des Torrahmens angeordnet. Die Tor-Verarbeitungseinheit kann im Gegensatz dazu auch entfernt vom Tor angeordnet sein, ist bevorzugt aber ebenfalls in der Nähe des Tores angeordnet. Besonders bevorzugt sind Tor-Antenneneinheit und Tor-Verarbeitungseinheit in einem gemeinsamen Gehäuse untergebracht, wodurch die Montage und auch das Nachrüsten einfacher ist.

Das Tormodul ist über eine Torschnittstelle mit der Steuerung des Tores verbindbar und kann an der Steuerung Signale bereitstellen und Signale aus der Steuerung des Tores auslesen. Das Tormodul erzeugt ein erstes dreidimensionales elektromagnetisches Feld. Das elektromagnetische Feld hat eine Frequenz in einem Bereich von vorzugsweise 3,75 GHz bis 4,25 GHz, wodurch eine besonders gute Abdeckung auch von abgeschirmten Bereichen erzielt werden kann.

Das Fahrzeugmodul hingegen wird auf dem Fahrzeug, insbesondere einem Stapler, montiert. Das Fahrzeugmodul erzeugt ebenfalls ein dreidimensionales elektromagnetisches Feld, das vorzugsweise eine Wellenlänge von 780 nm, vorzugsweise 60 mm oder mehr, vorzugsweise in einem Bereich von etwa 70 mm bis etwa 80 mm, und/oder eine Frequenz in einem Bereich von 3 GHz bis 5 GHz, vorzugsweise 3,5 GHz bis 4,5 GHz, besonders bevorzugt 3,75 GHz bis 4,25 GHz aufweist. Die erste Tor-Warnzone befindet sich vorzugweise in der Nähe des Tores, und deckt, in einer vertikalen Projektion, den Bereich beispielsweise vor oder hinter oder vor und hinter dem Tor ab. Wenn im Folgenden von Geometrien oder Konfigurationen oder Formen von Warnzonen gesprochen wird, ist jeweils eine vertikale Projektion auf den Boden gemeint. Beispielsweise hat die erste Tor-Warnzone eine im Wesentlichen rechteckige Form und erstreckt sich in Breitenrichtung leicht seitlich von Streben des Torrahmens und dann weg von dem Tor, nach Art eines Fußball-Fünfmeterraumes, um das Tor abzudecken.

In entsprechender Weise kann die Fahrzeug-Warnzone ebenfalls gebildet sein. Im Grunde kann die Fahrzeug-Warnzone wie in WO 2018/015315 gebildet sein. Die Fahrzeug-Warnzone bewegt sich mit dem Fahrzeug gemeinsam.

Sowohl Tormodul als auch Fahrzeugmodul sind dazu eingerichtet, sich wechselseitig zu erkennen. So erkennt das Tormodul, wenn sich ein Fahrzeugmodul innerhalb der ersten Tor-Warnzone befindet. Umgekehrt kann das Fahrzeugmodul ermitteln, dass sich ein Tormodul, genauer gesagt eine Tor-Antenneneinheit, innerhalb der ersten Fahrzeug-Warnzone befindet. Basierend auf der Ermittlung, dass sich ein Tormodul innerhalb der ersten Fahrzeug-Warnzone befindet, und/oder ein Fahrzeugmodul innerhalb der ersten TorWarnzone befindet, können dann verschiedene Folgeoperationen abgeleitet werden und durchgeführt werden, um eine Kollision zu verhindern.

Beispielsweise kann vorgesehen sein, dass das Fahrzeugmodul und/oder das Tormodul dazu ausgebildet sind, bei Ermittlung des jeweils anderen Moduls ein Warnsignal auszugeben. Auch können die beiden Module wechselseitig ein Signal aneinander senden, um das jeweils andere Modul dazu zu veranlassen, ein Warnsignal auszugeben. So ist es beispielsweise denkbar und bevorzugt, dass, wenn das Tormodul erkennt, dass ein Fahrzeugmodul in der ersten Tor-Warnzone ist, das Tormodul ein Signal an das Fahrzeugmodul sendet, welches in Antwort darauf ein Warnsignal für den Fahrer ausgibt. Umgekehrt kann auch vorgesehen sein, dass, wenn das Fahrzeugmodul ermittelt, dass ein Tormodul innerhalb der ersten Fahrzeug-Warnzone ist, das Fahrzeugmodul ein Signal an das Tormodul sendet und das Tormodul ein entsprechendes Warnsignal, beispielsweise das Aufleuchten einer Lampe, aktiviert.

In einer bevorzugten Ausführungsform ist der ersten Tor-Warnzone ein erster Tor-Aktivitätssatz mit mindestens einer ersten Tor-Folgeoperation und ein zweiter Tor-Aktivitätssatz mit mindestens einer zweiten Tor-Folgeoperation zugeordnet. Der ersten Fahrzeug-Warnzone ist in gleicher Weise ein erster Fahrzeug-Aktivitätssatz mit mindestens einer ersten Fahrzeug-Folgeoperation und ein zweiter Fahrzeug-Aktivitätssatz mit mindestens einer zweiten Fahrzeug-Folgeoperation zugeordnet. Die ersten und zweiten Aktivitätssätze werden vorzugsweise in Abhängigkeit davon aktiviert, ob ein Fahrzeugmodul innerhalb der ersten Tor-Warnzone detektiert wurde und/oder ein Tormodul innerhalb der ersten Fahrzeug-Warnzone detektiert wurde. Auch ist es denkbar, dass die ersten und zweiten Aktivitätssätze in Abhängigkeit von weiteren Faktoren, wie beispielsweise einer Geschwindigkeit, einem Ort des jeweiligen Moduls innerhalb der jeweiligen Warnzone und dergleichen aktiviert werden. Eine Folgeoperation kann insbesondere das Senden eines Signals umfassen, wobei ein solches Signal, ein Warnsignal, ein Öffnungssignal, ein Bremssignal oder dergleichen sein kann. Eine weitere Folgeoperation kann auch das Aktivieren einer weiteren Warnzone, das Verändern der Warnzone das Einwirken auf weitere Elemente und dergleichen umfassen. Gemäß einer weiteren bevorzugten Ausführungsform ist die Tor-Verarbeitungseinheit dazu angepasst, über die Torschnittstelle ein Zustandssignal zu empfangen und mittels des empfangenen Zustandssignals zu ermitteln, ob sich das Tor in einem geöffneten oder geschlossenen Zustand befindet. Vorzugsweise ist die Tor-Verarbeitungseinheit auch dazu eingerichtet zu bestimmen, ob sich das Tor aktuell bewegt, und/oder wie weit dieses geöffnet ist.

Vorzugsweise ist die Tor-Verarbeitungseinheit dazu ausgebildet, in Abhängigkeit des ermittelten Zustands den ersten oder zweiten Tor-Aktivitätssatz auszuwählen. Beispielsweise kann vorgesehen sein, dass die Tor-Verarbeitungseinheit den ersten Tor-Aktivitätssatz auswählt, wenn festgestellt wird, dass das Tor geschlossen ist, und den zweiten Tor-Aktivitätssatz auswählt, wenn festgestellt wird, dass das Tor geöffnet ist. Der erste Tor-Aktivitätssatz kann dann in diesem Fall eine Folgeoperation umfassen, die beispielsweise ein Bremsen des Fahrzeugs auslöst, und der zweite Tor-Aktivitätssatz umfasst vorzugsweise eine Folgeoperation, die kein Bremsen auslöst, sondern nur ein Warnen. Der erste Tor-Aktivitätssatz kann ferner eine Folgeoperation umfassen, die zu einem Öffnen des Tores führt, oder auch zu einem beschleunigten Öffnen des Tores führt. Auch ist es denkbar bevorzugt, dass der aktuelle Öffnungsgrad des Tores an das Fahrzeugmodul übergeben wird.

Besonders bevorzugt ist die Tor-Verarbeitungseinheit dazu eingerichtet, ein Bremssignal zum Bremsen des Fahrzeugs an das Fahrzeugmodul zu senden. Ermittelt das Tormodul, dass ein Fahrzeugmodul innerhalb der ersten Tor-Warnzone ist, sendet die Tor-Verarbeitungseinheit vorzugsweise ein derartiges Bremssignal an das Fahrzeugmodul, welches wiederum das Bremssignal, oder ein abgeleitetes Bremssignal, an eine Fahrzeugsteuerung ausgibt, sodass das Fahrzeug abgebremst wird. Vorzugsweise wird ein solches Bremssignal von der Tor-Verarbeitungseinheit solange bereitgestellt, wie das Tor geschlossen ist und/oder nur teilweise geöffnet ist. Auch kann vorgesehen sein, dass abgestufte Bremssignale bereitgestellt werden, die zu einem Bremsen auf eine vorbestimmte Geschwindigkeit geeignet sind. So kann beispielsweise vorgesehen sein, dass das Fahrzeug bis auf einen Stillstand gebremst wird, solang das Tor geschlossen ist, aber nur auf Schrittgeschwindigkeit gebremst wird, wenn das Tor teilweise oder vollständig geöffnet ist.

In einer weiteren bevorzugten Ausgestaltung ist die Tor-Verarbeitungseinheit dazu eingerichtet, an der Torschnittstelle ein Öffnungssignal zum Öffnen des Tores bereitzustellen. Dies kann in einer Variante automatisiert erfolgen, wenn die Tor-Verarbeitungseinheit feststellt, dass ein Fahrzeugmodul in der ersten Tor-Warnzone vorhanden ist. In einer weiteren Variante kann auch vorgesehen sein, dass ein Fahrzeugmodul dazu eingerichtet ist, ein Öffnungssignal an das Tormodul zu senden, wenn das Fahrzeugmodul ermittelt, dass ein Tormodul innerhalb der ersten Fahrzeug-Warnzone ist. Das vom Fahrzeugmodul gesendete Öffnungssignal wird dann von der Tor-Verarbeitungseinheit weitergeleitet, oder ein abgeleitetes Signal wird an der Torschnittstelle bereitgestellt, sodass das Tor geöffnet wird. Erfindungsgemäß ist die Tor-Verarbeitungseinheit dazu eingerichtet ist, eine Konfiguration der ersten Tor-Warnzone an das Fahrzeugmodul zu senden. Das Fahrzeugmodul ist vorzugsweise dazu vorgesehen, die Konfiguration der ersten Tor-Warnzone zu verarbeiten, beispielsweise, um zu ermitteln, ob es sich innerhalb der ersten Tor-Warnzone befindet. Weiterhin ist denkbar, dass das Fahrzeugmodul dazu eingerichtet ist, zu ermitteln, in welche Richtung sich das Fahrzeug in Bezug auf das Tor annähert, bzw. entfernt, und basierend auf dieser Ermittlung, vorzugsweise ein entsprechendes Signal an das Tormodul zu senden.

Vorzugsweise ist die Tor-Verarbeitungseinheit dazu angepasst, eine zweite Tor-Warnzone für das Tor zu definieren, die einen Teilbereich des ersten elektromagnetischen Feldes darstellt, wobei die Tor-Verarbeitungseinheit dazu angepasst ist, mittels der Tor-Antenneneinheit zu bestimmen, ob sich das Fahrzeugmodul innerhalb der zweiten Tor-Warnzone befindet. Die zweite Tor-Warnzone kann neben der ersten Tor-Warnzone, auf einer gegenüberliegenden Seite des Tores, oder teilweise oder vollständige überlappend mit der ersten Tor-Warnzone angeordnet sein. Vorzugsweise ist die zweite Tor-Warnzone näher am Tor, bzw. kleiner als die erste Tor-Warnzone, sodass eine Ermittlung des Fahrzeugmoduls in der zweiten Tor-Warnzone im Allgemeinen angibt, dass sich das Fahrzeug näher am Tor befindet, als wenn es nur in der ersten Tor-Warnzone ermittelt worden wäre.

Es kann auch vorgesehen sein, dass in Abhängigkeit, ob sich das Fahrzeugmodul in der ersten oder zweiten Torwarnzone befindet, der erste oder zweite Aktivitätssatz aktiviert wird. So kann beispielsweise vorgesehen sein, dass der erste Tor-Aktivitätssatz aktiviert wird, wenn das Fahrzeugmodul in die erste Tor-Warnzone eintritt, und der zweite Tor-Aktivitätssatz aktiviert wird, wenn das Fahrzeugmodul in die zweite Tor-Warnzone eintritt. Der erste Tor-Aktivitätssatz kann dann beispielsweise eine Folgeoperation enthalten, die die Ausgabe eines Warnsignals an dem Fahrzeugmodul bewirkt. In entsprechender Weise kann der zweite Tor-Aktivitätssatz eine Folgeoperation umfassen, die ein Bremsen des Fahrzeugs veranlasst.

Gleiches kann analog für das Fahrzeug gelten. Auch die Fahrzeug-Verarbeitungseinheit kann dazu angepasst sein, eine zweite Fahrzeug-Warnzone für das Fahrzeug zu definieren.

In einer Variante ist die erste Tor-Warnzone in einer vertikalen Projektion kreisförmig, oval, rechteckig oder trapezförmig. Es kann auch vorgesehen sein, dass die Konfiguration der ersten Tor-Warnzone in Abhängigkeit der Öffnungshöhe des Tores variiert. Beispielsweise kann vorgesehen sein, dass ein geschlossenes Tor eine größere Tor-Warnzone umfasst, als ein offenes Tor.

Vorzugsweise weist das Tor-Modul zwei oder mehr Antennen auf, die jeweils mit einer eigenen Steuereinheit, vorzugsweise Tor-Verarbeitungseinheit verbunden sind, und gemeinsam das erste elektromagnetische Feld aufspannen. Die beiden Einheiten aus Antenne und Steuereinheit überwachen sich vorzugsweise gegenseitig auf Funktionsfähigkeit. Jede Einheit kann auch mehr als eine Antenne aufweisen. Sobald eine der Steuereinheiten ermittelt, dass die andere Antenne und/oder Steuereinheit nicht mehr oder nicht mehr richtig funktioniert, übernimmt die funktionierende Einheit die gesamte erste TorWarnzone und kann zu diesem Zweck die Konfiguration der der ersten Tor-Warnzone ändern. Es kann auch vorgesehen sein, dass die funktionierende Einheit eine vollständig neue erste Tor-Warnzone und ggf. auch eine zweite Tor-Warnzone aufbaut.

Die erste Fahrzeug-Warnzone wird von dem Fahrzeugmodul, bzw. der Fahrzeug-Verarbeitungseinheit, vorzugsweise so ausgebildet, dass sie sich von dem Fahrzeug in Fahrrichtung nach vorne erstreckt. Beispielsweise kann die erste Fahrzeug-Warnzone etwa trapezförmig sein und sich von einer Front des Fahrzeugs nach vorne erstrecken und sich dabei leicht aufweiten. Es kann auch vorgesehen sein, dass die Geometrie und/oder Ausrichtung der ersten Fahrzeug-Warnzone in Abhängigkeit eines Lenkwinkels variiert wird. Bevorzugt ist die erste Fahrzeug-Warnzone stets so ausgerichtet, dass sie etwa eine zukünftige Trajektorie für das Fahrzeug abdeckt, beispielsweise für die nächsten 2, 4, 6, 8 oder 10 Sekunden. Dies bedingt dann auch, dass die Größe der ersten Fahrzeug-Warnzone in Abhängigkeit der Geschwindigkeit variiert wird. Eine höhere Fahrzeuggeschwindigkeit zieht dann eine größere Fahrzeug-Warnzone nach sich, während eine geringe Geschwindigkeit zu einer kleineren Fahrzeug-Warnzone führt. Die Fahrzeug-Verarbeitungseinheit kann dazu ausgebildet sein, eine Konfiguration der ersten Fahrzeug-Warnzone an das Tormodul zu senden, wobei das Tormodul ferner dazu eingerichtet ist, basierend auf der empfangenen Konfiguration der ersten Fahrzeug-Warnzone, eine Fahrtrichtung des Fahrzeugs relativzum Tor zu ermitteln.

Auf diese Weise ist es möglich, dass das Tormodul dazu eingerichtet ist, ein Öffnungssignal zum Öffnen des Tores bereitzustellen, wenn ermittelt wird, dass sich das Fahrzeugmodul auf das Tor zubewegt. Je nach Fahrtrichtung des Fahrzeugs, kann es vorkommen, dass das Fahrzeug die erste Tor-Warnzone parallel zum Tor durchfährt, also nicht auf das Tor zufährt, sondern nur parallel zu diesem, sodass ein Öffnen des Tores nicht notwendig ist. Gemäß dieser Ausführungsform wird dies durch das Tormodul ermittelt und entsprechend kein Öffnungssignal an der Torschnittstelle bereitgestellt. Hierdurch wird ein Fehlöffnen des Tores verhindert und ein Bediener des Fahrzeugs wird nicht abgelenkt oder unnötig gewarnt.

In einem zweiten Aspekt der Erfindung wird die eingangs genannte Aufgabe gelöst durch ein Verfahren zum Verhindern von Kollisionen zwischen einem Fahrzeug und einem Tor gemäß Anspruch 11, unter Verwendung eines Torsicherheitssystems gemäß einer der vorstehend beschriebenen bevorzugten Ausführungsformen eines Torsicherheitssystems gemäß dem ersten Aspekt der Erfindung, wobei das Fahrzeugmodul auf einem Fahrzeug, insbesondere Stapler, montiert ist und das Tormodul benachbart zu einem Tor, insbesondere Rolltor einer Halle, montiert ist, wobei das Verfahren die Schritte aufweist: Erzeugen eines ersten dreidimensionalen elektromagnetischen Feldes, das eine Frequenz in einem Bereich von etwa 3,75 GHz bis 4,25 GHz aufweist, unter Verwendung der Tor-Antenneneinheit; Definieren einer ersten Tor-Warnzone für das Tor, die einen Teilbereich des ersten elektromagnetischen Feldes darstellt; Erzeugen eines zweiten dreidimensionalen elektromagnetischen Feldes, das eine Frequenz in einem Bereich von 3,75 GHz bis 4,25 GHz aufweist, unter Verwendung der Fahrzeug-Antenneneinheit; Definieren einer ersten Fahrzeug-Warnzone für das Fahrzeug, die einen Teilbereich des zweiten elektromagnetischen Feldes darstellt; Ermitteln, ob sich das Fahrzeugmodul innerhalb der ersten Tor-Warnzone befindet, unter Verwendung der Tor-Verarbeitungseinheit; und Ermitteln, ob sich das Tormodul innerhalb der ersten Fahrzeug-Warnzone befindet, unter Verwendung der Fahrzeug-Verarbeitungseinheit.

Es soll verstanden werden, dass das Torsicherheitssystem gemäß dem ersten Aspekt der Erfindung und das Verfahren gemäß dem zweiten Aspekt der Erfindung gleiche und ähnliche Unteraspekte aufweisen, wie sie insbesondere in den abhängigen Ansprüchen niedergelegt sind. Insofern wird vollumfänglich auf die obige Beschreibung zum Torsicherheitssystem gemäß dem ersten Aspekt der Erfindung verwiesen.

Das Verfahren stellt einen Ablauf dar, bei dem eine gegenseitige Kommunikation des Fahrzeugmoduls und des Tormoduls stattfindet. Beide Module sind aktiv und erkennen gegenseitig das Eindringen des anderen Moduls in die eigene Warnzone. Hierdurch kann die Sicherheit deutlich erhöht werden und das Auslösen von Fehlalarmen bzw. Fehlfolgeoperationen kann verhindert werden.

Vorzugsweise umfasst das Verfahren die Schritte: Ermitteln, ob sich ein weiteres auf die Tor-Antenneneinheit abgestimmtes Fahrzeugmodul, welches an einem weiteren Fahrzeug montiert ist, innerhalb der ersten Tor-Warnzone befindet, unter Verwendung der Tor-Verarbeitungseinheit; und Senden von Bremssignalen von der Tor-Verarbeitungseinheit an das Fahrzeugmodul und das weitere Fahrzeugmodul. Vorzugsweise umfasst das Verfahren auch die Schritte: Bereitstellen eines abgeleiteten Bremssignals für das Fahrzeug an einer Fahrzeugschnittstelle des Fahrzeugmoduls zum Bremsen des Fahrzeugs, und Bereitstellen eines abgeleiteten Bremssignals für das weitere Fahrzeug an einer Fahrzeugschnittstelle des weiteren Fahrzeugmoduls zum Bremsen des weiteren Fahrzeugs. Sofern also bestimmt wird, dass sich zwei Fahrzeugmodule innerhalb der ersten Tor-Warnzone befinden, werden beide Fahrzeuge abgebremst. Das Bremsen kann dabei bis auf einen Stillstand ausgelegt sein, oder nur auf einen Grad um die die Geschwindigkeit der beiden Fahrzeuge reduzieren, um so Kollisionen zu vermeiden. Es kann auch vorgesehen sein, dass eines der beiden Fahrzeuge vollständig abgebremst wird, während das andere nur verlangsamt wird.

Ferner umfasst das Verfahren vorzugsweise den Schritt: Ermitteln, ob sich das Fahrzeugmodul auf das Tor zu bewegt. Dies erfolgt vorzugsweise durch Senden einer Konfiguration der ersten Fahrzeug-Warnzone an die Tor-Verarbeitungseinheit und Ermitteln, unter Verwendung einer Konfiguration der ersten Tor-Warnzone, einer Fahrtrichtung des Fahrzeugs relativ zu dem Tor. Sofern für das Tor auch eine zweite Tor-Warnzone vorgesehen ist, kann auch die Konfiguration der zweiten Tor-Warnzone verwendet werden. Das Gleiche gilt auch für die erste Fahrzeug-Warnzone. Durch den Abgleich der beiden Zonen, der ersten TorWarnzone und der ersten Fahrzeug-Warnzone, kann ermittelt werden, in welche Richtung sich das Fahrzeug bewegt, und daraus kann ermittelt werden, ob das Fahrzeug durch das Tor fahren wird, das heißt, ob eine vorausberechnete Fahrzeugtrajektorie durch das Tor verläuft. Wird dies ermittelt, wird vorzugsweise ein Öffnungssignal von dem Fahrzeugmodul an das Tormodul gesandt, und an dem Tormodul empfangen und ein Abgleich des Öffnungssignals von dem Tormodul an einer Torschnittstelle des Tormoduls bereitgestellt. Die Torschnittstelle des Tormoduls ist vorzugsweise verbunden, bzw. verbindbar mit einer Steuerung des Tores, sodass in Antwort hierauf das Tor geöffnet wird, bzw. offengehalten wird.

Das Öffnen des Tores erfolgt also nicht allein torseitig, sondern es ist ein Signal erforderlich, das von dem Fahrzeug an das Tormodul gesendet wird.

Ferner umfasst das Verfahren vorzugsweise die Schritte: Senden eines Bremssignals von dem Tormodul an das Fahrzeugmodul für dann Fall, dass ermittelt wird, dass sich das Fahrzeug auf das Tor zu bewegt; und Empfangen des Bremssignals an dem Fahrzeugmodul sowie Bereitstellen eines abgeleiteten Bremssignals an einer Fahrzeugschnittstelle des Fahrzeugmoduls. In dieser Ausführungsform erfolgt das Bremsen vorzugsweise nicht bis zu einem Stillstehen des Fahrzeugs, sondern das Fahrzeug wird vielmehr abgebremst, beispielsweise auf Schrittgeschwindigkeit, bis es durch das Tor hindurchgefahren ist. Wird beispielsweise erkannt, dass das Fahrzeug sich von dem Torwegbewegt, kann das Bremssignal wegfallen, oder es wird ein weiteres Signal gesandt, beispielsweise ein Beschleunigungssignal, das anzeigt, dass es dem Fahrzeug erlaubt ist, zu beschleunigen. Auf diese Weise ist es möglich, bei der Durchfahrt durch ein Tor das Fahrzeug automatisiert abzubremsen und nach der Durchfahrt wieder beschleunigen zu lassen.

Weiterhin ist bevorzugt, dass das Verfahren den Schritt umfasst: Ermitteln einer Masthöhe des Fahrzeugs; und Ausgeben eines Warnsignals an dem Fahrzeugmodul, wenn die ermittelte Masthöhe größer als die Toröffnungshöhe ist. Die Masthöhe des Fahrzeugs wird vorzugsweise mittels eines Sensors an dem Fahrzeug ermittelt, beispielsweise einem Kontaktsensor, Taster oder dergleichen. Die Masthöhe kann dann von dem Fahrzeugmodul an das Tormodul gesandt werden und das Tormodul ermittelt basierend hierauf und auf Signale, die das Tormodul von der Steuerung des Tores empfängt, ob die Masthöhe größer als die aktuelle Öffnung des Tores ist. Für den Fall, dass die Masthöhe größer als die Toröffnung ist, wird wenigstens ein Warnsignal an dem Fahrzeugmodul ausgegeben. Es kann auch vorgesehen sein, das weitere Signale bereitgestellt werden, wie beispielsweise ein Bremssignal und/oder ein Signal zum Absenken des Mastes.

In einem dritten Aspekt wird die erstgenannte Aufgabe durch ein Computerprogramm gelöst, umfassend Befehle, die bewirken, dass das Torsicherheitssystem gemäß einer der vorstehend beschriebenen bevorzugten Ausführungsformen eines Torsicherheitssystems gemäß dem ersten Aspekt der Erfindung die Verfahrensschritte des Verfahrens gemäß einer der vorstehend beschriebenen bevorzugten Ausführungsformen eines Verfahrens gemäß dem zweiten der Erfindung ausübt.

Zusätzlich zur Erfindung wird ein nicht beanspruchtes Schleusensicherheitssystem zum Verhindern von Kollisionen zwischen Fahrzeugen offenbart, mit einem ersten Tormodul, aufweisend, eine erste Tor-Antenneneinheit, mit zumindest einer ersten Tor-Antenne, welche dazu angepasst ist, in einer vorbestimmten räumlichen Beziehung zu einem Torrahmen eines ersten Tores montiert zu werden, und ein erstes dreidimensionales elektromagnetisches Feld zu erzeugen, eine mit der ersten Tor-Antenneneinheit verbundene erste Tor-Verarbeitungseinheit welche dazu angepasst ist, wenigstens eine erste Tor-Warnzone für das erste Tor zu definieren, die einen Teilbereich des ersten elektromagnetischen Feldes darstellt, wobei die erste Tor-Verarbeitungseinheit dazu angepasst ist, mittels der ersten Tor-Antenneneinheit zu ermitteln, ob sich ein auf die erste Tor-Antenneneinheit abgestimmtes Fahrzeugmodul innerhalb der ersten Tor-Warnzone befindet, und eine erste Torschnittstelle zum Verbinden des ersten Tormoduls mit einer Steuerung des ersten Tores. Ferner umfasst das Torsicherheitssystem ein zweites Tormodul, aufweisend, eine zweite Tor-Antenneneinheit, mit zumindest einer zweiten Tor-Antenne, welche dazu angepasst ist, in einer vorbestimmten räumlichen Beziehung zu einem Torrahmen eines zweiten Tores, das mit dem ersten Tor eine Schleuse bildet, montiert zu werden, und ein zweites dreidimensionales elektromagnetisches Feld zu erzeugen, eine mit der Tor-Antenneneinheit verbundene zweite Tor-Verarbeitungseinheit welche dazu angepasst ist, wenigstens eine dritte Tor-Warnzone für das zweite Tor zu definieren, die einen Teilbereich des zweiten elektromagnetischen Feldes darstellt, wobei die zweite Tor-Verarbeitungseinheit dazu angepasst ist mittels der zweiten Tor-Antenneneinheit zu ermitteln, ob sich ein auf die zweite Tor-Antenneneinheit abgestimmtes Fahrzeugmodul innerhalb der dritten Tor-Warnzone befindet, und eine zweite Torschnittstelle zum Verbinden des zweiten Tormoduls mit einer Steuerung des zweiten Tores; und mit zumindest einem Fahrzeugmodul, aufweisend eine Fahrzeug-Antenneneinheit, mit zumindest einer ersten Fahrzeug-Antenne, welche dazu angepasst ist, in einer vorbestimmten räumlichen Beziehung an dem Fahrzeug montiert zu werden, und ein erstes dreidimensionales elektromagnetisches Fahrzeugfeld zu erzeugen, wobei das erste Tormodul dazu angepasst ist, eine Konfiguration der ersten Tor-Warnzone an das zweite Tormodul zu senden, wenn ermittelt wird, dass sich das Fahrzeugmodul innerhalb der ersten Tor-Warnzone befindet, und wobei das zweite Tormodul dazu angepasst ist, eine Konfiguration der dritten Tor-Warnzone an das erste Tormodul zu senden, wenn ermittelt wird, dass sich das Fahrzeugmodul innerhalb der dritten Tor-Warnzone befindet.

Das erste Tor ist an einem ersten Zugang zu einem Raum angeordnet und bildet mit dem zweiten Tor, das an einem zweiten Zugang zu dem Raum angeordnet ist, eine Schleuse. Vorzugsweise wird die Schleuse durch das erste Tor und das zweite Tor geschlossen. Der Raum wird bevorzugt durch Seitenwände gebildet, die das erste Tor und das zweite Tor verbinden. Die Schleuse kann weitere Zugänge aufweisen, welche bevorzugt durch weitere Tore verschlossen sind.

Das Schleusensicherheitssystem umfasst also drei Module, nämlich ein erstes Tormodul, ein zweites Tormodul und ein Fahrzeugmodul. Das erste Tormodul ist dem ersten Tor zugeordnet, das zweite Tormodul ist dem zweiten Tor zugeordnet und das Fahrzeugmodul einem Fahrzeug. Bei dem ersten Tor und/oder dem zweiten Tor handelt es sich vorzugsweise um ein Rolltor, wobei auch andere Tore umfasst sein sollen. Das erste Tormodul und das zweite Tormodul sind dazu eingerichtet, das Fahrzeugmodul zu erkennen. So erkennt das erste Tormodul, wenn sich ein Fahrzeugmodul innerhalb der ersten Tor-Warnzone befindet, und das zweite Tormodul erkennt, wenn sich ein Fahrzeugmodul innerhalb der dritten Tor-Warnzone befindet. In Antwort auf ein Ermitteln, dass sich ein Fahrzeugmodul innerhalb der ersten Tor-Warnzone befindet, sendet das erste Tormodul die Konfiguration der ersten Tor-Warnzone an das zweite Tormodul. Ebenso sendet das zweite Tormodul in Antwort auf ein Ermitteln, dass sich ein Fahrzeugmodul innerhalb der dritten TorWarnzone befindet, die Konfiguration der dritten Tor-Warnzone an das erste Tormodul.

Basierend auf einem ermittelten Fahrzeugmodul innerhalb der ersten Tor-Warnzone und/oder innerhalb der dritten Tor-Warnzone können verschiedene Folgeoperationen abgeleitet werden, um eine Kollision zu verhindern. Beispielsweise kann vorgesehen sein, dass das erste Tormodul und/oder das zweite Tormodul dazu angepasst ist, basierend auf einem ermittelten Fahrzeugmodul innerhalb der ersten Tor-Warnzone und/oder dritten Tor-Warnzone ein Warnsignal auszugeben. Auch können die beiden Module wechselseitig ein Signal aneinander senden, um das jeweils andere Modul dazu zu veranlassen, ein Warnsignal auszugeben.

Vorzugsweise ist das Fahrzeugmodul dazu eingerichtet, das erste Tormodul und das zweite Tormodul zu erkennen. Es kann auch vorgesehen sein, dass das erste Tormodul dazu eingerichtet ist, das zweite Tormodul zu erkennen und/oder, dass das zweite Tormodul dazu eingerichtet ist, das erste Tormodul zu erkennen. Vorzugsweise ist das erste Tormodul dazu angepasst, einen Abstand zum zweiten Tormodul zu ermitteln. Ebenso kann auch das zweite Tormodul dazu angepasst sein, einen Abstand zum ersten Tormodul zu ermitteln. In einer besonders bevorzugten Ausführungsform ist die erste Tor-Verarbeitungseinheit dazu angepasst, die erste Tor-Warnzone unter Verwendung des ermittelten Abstands zum zweiten Tormodul zu definieren. Ferner bevorzugt ist die zweite Tor-Verarbeitungseinheit dazu angepasst, die zweite Tor-Warnzone unter Verwendung des ermittelten Abstands zum ersten Tormodul zu definieren.

In einer bevorzugten Ausführungsform des nicht beanspruchten Schleusensicherheitssystems ist die erste Tor-Verarbeitungseinheit dazu angepasst, eine zweite Tor-Warnzone zu definieren, die einen Teilbereich des ersten elektromagnetischen Feldes darstellt, wobei die erste Tor-Verarbeitungseinheit dazu angepasst ist, mittels der ersten Tor-Antenneneinheit zu bestimmen, ob sich das Fahrzeugmodul innerhalb der zweiten Tor-Warnzone befindet. Zudem ist die zweite Tor-Verarbeitungseinheit dazu angepasst, eine vierte Tor-Warnzone zu definieren, die einen Teilberiech des zweiten elektromagnetischen Feldes darstellt, wobei die zweite Tor-Verarbeitungseinheit dazu angepasst ist, mittels der zweiten Tor-Antenneneinheit zu bestimmen, ob sich das Fahrzeugmodul innerhalb der vierten Tor-Warnzone befindet. Vorzugsweise ist die erste Tor-Verarbeitungseinheit dazu angepasst, basierend auf der Konfiguration der ersten und/oder der zweiten Tor-Warnzone zu ermitteln, ob sich das Fahrzeugmodul innerhalb der Schleuse befindet. In analoger Weise kann die zweite Tor-Verarbeitungseinheit dazu angepasst sein, basierend auf der Konfiguration der dritten und/oder der vierten Tor-Warnzone zu ermitteln, ob sich das Fahrzeugmodul innerhalb der Schleuse befindet.

Vorzugsweise ist das erste Tormodul dazu angepasst, eine Konfiguration der zweiten TorWarnzone an das zweite Tormodul zu senden, wenn ermittelt wird, dass sich das Fahrzeugmodul innerhalb der zweiten Tor-Warnzone befindet, und das zweite Tormodul ist vorzugsweise dazu angepasst, eine Konfiguration der vierten Tor-Warnzone an das erste Tormodul zu senden, wenn ermittelt wird, dass sich das Fahrzeugmodul innerhalb der vierten Tor-Warnzone befindet.

In einer bevorzugten Ausführungsform des nicht beanspruchten Schleusensicherheitssystems ist die zweite Tor-Warnzone, neben der ersten TorWarnzone, auf einer gegenüberliegenden Seite des ersten Tores, oder teilweise oder vollständig überlappend mit der ersten Tor-Warnzone angeordnet. Ebenso bevorzugt ist die vierte Tor-Warnzone, neben der dritten Tor-Warnzone, auf einer gegenüberliegenden Seite des zweiten Tores, oder teilweise oder vollständig überlappend mit der zweiten Tor-Warnzone angeordnet. Vorzugsweise sind die erste Tor-Warnzone sowie die zweite Tor-Warnzone auf gegenüberliegenden Seiten des ersten Tores ausgebildet und die dritte Tor-Warnzone sowie die vierte Tor-Warnzone auf gegenüberliegenden Seiten des zweiten Tores ausgebildet. Besonders bevorzugt erstrecken sich die erste Tor-Warnzone und die dritte Tor-Warnzone von dem Tormodul in den Innenraum der Schleuse. So kann ein Innenraum der Schleuse durch die erste und dritte Tor-Warnzone überwacht werden, während Zufahrtsbereiche zur Schleuse durch die zweite Tor-Warnzone und die vierte Tor-Warnzone überwacht werden. Vorzugsweise wird der gesamte Innenraum oder die gesamte Bodenfläche der Schleuse durch wenigstens eine Tor-Warnzone des ersten Tormoduls und durch wenigstens eine Tor-Warnzone des zweiten Tormoduls abgedeckt. Hierdurch kann sicherhergestellt werden, dass ein in dem Innenraum der Schleuse angeordnetes Fahrzeugmodul jederzeit von zumindest einem, bevorzugt mehreren, Tor-Modul erfasst wird. Bevorzugt ist die erste Tor-Verarbeitungseinheit dazu angepasst, basierend auf der empfangenen Konfiguration der dritten und/oder vierten Tor-Warnzone zu ermitteln, ob sich ein Fahrzeugmodul innerhalb der Schleuse befindet, und die zweite Tor-Verarbeitungseinheit ist bevorzugt dazu angepasst, basierend auf der empfangenen Konfiguration der ersten und/oder zweiten Tor-Warnzone zu ermitteln, ob sich das Fahrzeugmodul innerhalb der Schleuse befindet. Somit kann ein Sicherheitsbereich der Schleuse, der aus den Zufahrtsbereichen zum ersten und zweiten Tor sowie aus dem Innenraum der Schleuse gebildet wird, vollständig überwacht werden.

In einer bevorzugten Ausgestaltung des nicht beanspruchten Schleusensicherheitssystems sind die erste Tor-Verarbeitungseinheit und die zweite Tor-Verarbeitungseinheit dazu eingerichtet, ein Bremssignal zum Bremsen des Fahrzeugs an das Fahrzeugmodul zu senden. Hierfür ist das Fahrzeugmodul vorzugsweise mit einer Fahrzeugsteuerung des Fahrzeugs verbunden.

Vorzugsweise sind die erste Tor-Verarbeitungseinheit und die zweite Tor-Verarbeitungseinheit dazu eingerichtet, ein Bremssignal an ein zweites Fahrzeugmodul zu senden, zum Bremsen des Fahrzeugs, das das zweite Fahrzeugmodul aufweist, wenn ermittelt wird, dass sich ein erstes Fahrzeugmodul in der Schleuse befindet. Dies ist besonders vorteilhaft, um eine Kollision von Fahrzeugen im Sicherheitsbereich der Schleuse zu vermeiden. Beispielsweise kann ein zweites Fahrzeug, das sich im Zufahrtsbereich eines der Tore befindet, gebremst werden, während ein erstes Fahrzeug die Schleuse durchfährt. Bevorzugt wird an beide Fahrzeugmodule ein Bremssignal gesendet.

In einer bevorzugten Ausführungsform des nicht beanspruchten Schleusensicherheitssystems ist die erste Tor-Verarbeitungseinheit dazu angepasst, an der ersten Torschnittstelle ein erstes Zustandssignal zu empfangen, das einen ersten Öffnungszustand des ersten Tores angibt, mittels des empfangenen ersten Zustandssignals des ersten Tores zu ermitteln, ob sich das erste Tor in einem geöffneten oder geschlossenen Zustand befindet, und den ermittelten Torzustand des ersten Tores an die zweite Tor-Verarbeitungseinheit zu senden, wobei die zweite Tor-Verarbeitungseinheit bevorzugt dazu angepasst ist, an der zweiten Torschnittstelle ein zweites Zustandssignal zu empfangen, das einen zweiten Öffnungszustand des zweiten Tores angibt, mittels des empfangenen zweiten Zustandssignals des zweiten Tores zu ermitteln, ob sich das zweite Tor in einem geöffneten oder geschlossenen Zustand befindet, und den ermittelten Torzustand des zweiten Tores an die erste Tor-Verarbeitungseinheit zu senden. Somit liegen sowohl an der ersten Tor-Verarbeitungseinheit als auch an der zweiten Tor-Verarbeitungseinheit Informationen über den Öffnungszustand des ersten und zweiten Tores vor. Besonders bevorzugt wird der Öffnungszustand an die korrespondierende Tor-Verarbeitungseinheit gesendet, wenn sich der Öffnungszustand des Tores ändert. Vorzugsweise ist die erste Tor-Verarbeitungseinheit dazu eingerichtet, an der ersten Torschnittstelle ein erstes Öffnungssignal zum Öffnen des ersten Tores bereitzustellen, und die zweite Tor-Verarbeitungseinheit ist vorzugsweise dazu eingerichtet, an der zweiten Torschnittstelle ein zweites Öffnungssignal zum Öffnen des zweiten Tores bereitzustellen. Es kann vorgesehen sein, dass die erste Tor-Verarbeitungseinheit ein erstes Öffnungssignal bereitstellt, wenn ermittelt wird, dass sich ein Fahrzeugmodul innerhalb der ersten und/oder dritten Tor-Warnzone befindet. In analoger Weise stellt die zweite Tor-Verarbeitungseinheit vorzugsweise ein zweites Öffnungssignal bereit, wenn ermittelt wird, dass sich ein Fahrzeugmodul innerhalb der zweiten und/oder vierten Tor-Warnzone befindet.

Vorzugsweise stellt die erste Tor-Verarbeitungseinheit das erste Öffnungssignal nur bereit, wenn ermittelt wird, dass sich das zweite Tor in einem geschlossenen Zustand befindet.

Ebenso kann es bevorzugt sein, dass die zweite Tor-Verarbeitungseinheit das zweite Öffnungssignal nur bereitstellt, wenn ermittelt wird, dass sich das erste Tor in einem geschlossenen Zustand befindet. Somit kann sichergestellt werden, dass immer jeweils nur eines der Tore geöffnet ist. Es soll verstanden werden, dass für eine Schleuse mit drei oder mehr Toren bevorzugt ist, dass ein Öffnungssignal für ein Tor nur bereitgestellt wird, wenn ermittelt wird, dass alle übrigen Tore der Schleuse geschlossen sind. In einer derartigen Ausgestaltung kann sichergestellt werden, dass verschiedene Fahrzeuge nicht durch verschiedene Tore in die Schleuse einfahren können, wodurch ein Kollisionsrisiko minimiert wird. Zudem ist die Schleuse besonders als Isolationsschleuse und/oder Reinigungsschleuse, beispielsweise für ein Tiefkühllager, geeignet.

In einer bevorzugten Ausführungsform des nicht beanspruchten Schleusensicherheitssystems weist das Fahrzeugmodul ferner eine mit der Fahrzeug-Antenneneinheit verbundene Fahrzeug-Verarbeitungseinheit auf, die dazu angepasst ist, wenigstens eine erste Fahrzeug-Warnzone für das Fahrzeug zu definieren, die einen Teilbereich des zweiten elektromagnetischen Feldes darstellt, wobei die Fahrzeug-Verarbeitungseinheit dazu angepasst ist, eine Konfiguration der ersten Fahrzeug-Warnzone an das erste Tormodul und/oder das zweite Tormodul zu senden. Für weitere Merkmale der Fahrzeug-Warnzone und des Fahrzeugmoduls wird vollumfänglich auf obenstehende Beschreibung zu der Fahrzeug-Warnzone und dem Fahrzeugmodul, wie sie bei einem Torsicherheitssystem gemäß dem ersten Aspekt der Erfindung beschrieben wurden, Bezug genommen. Insbesondere wird Bezug genommen auf die Merkmale, wie sie in den abhängigen Ansprüchen niedergelegt sind.

Vorzugsweise ist das erste Tormodul dazu eingerichtet, basierend auf der empfangenen Konfiguration der ersten Fahrzeug-Warnzone, eine Fahrtrichtung des Fahrzeugs relativ zum ersten Tor zu ermitteln, und das zweite Tormodul ist bevorzugt dazu eingerichtet, basierend auf der empfangenen Konfiguration der ersten Fahrzeug-Warnzone, eine Fahrtrichtung des Fahrzeugs relativ zum zweiten Tor zu ermitteln. Ferner kann das erste Tormodul dazu eingerichtet sein, basierend auf der empfangenen Konfiguration der ersten Fahrzeug-Warnzone, eine Fahrtrichtung des Fahrzeugs relativ zum zweiten Tor zu ermitteln. Ebenso bevorzugt kann das zweite Tormodul dazu eingerichtet sein, basierend auf der empfangenen Konfiguration der ersten Fahrzeug-Warnzone, eine Fahrtrichtung des Fahrzeugs relativ zum ersten Tor zu ermitteln. Besonders bevorzugt ist das erste Tormodul dazu angepasst, die ermittelte Fahrtrichtung des Fahrzeugs an das zweite Tormodul zu senden. Ebenso bevorzugt ist das zweite Tormodul dazu angepasst, die ermittelte Fahrtrichtung des Fahrzeugs an das erste Tormodul zu senden. Vorzugsweise sind Folgeoperationen des ersten Tormoduls und/oder des zweiten Tormoduls abhängig von der ermittelten Fahrtrichtung des Fahrzeugs relativ zum ersten Tor und/oder zum zweiten Tor. Für das Ermitteln der Fahrtrichtung relativ zum ersten Tor und/oder zweiten Tor wird vollumfänglich auf obenstehende Beschreibung zum Torsicherheitssystem gemäß dem ersten Aspekt der Erfindung Bezug genommen. Insbesondere wird Bezug genommen auf Merkmale, die in den Ansprüchen zum Torsicherheitssystem gemäß dem ersten Aspekt der Erfindung dargelegt sind.

Ferner kann vorgesehen sein, dass das erste Tormodul dazu eingerichtet ist, ein erstes Öffnungssignal zum Öffnen des ersten Tores bereitzustellen, wenn ermittelt wird, dass sich das Fahrzeugmodul auf das erste Tor zu bewegt. In analoger Weise ist das zweite Tormodul bevorzugt dazu eingerichtet, ein zweites Öffnungssignal zum Öffnen des zweiten Tores bereitzustellen, wenn ermittelt wird, dass sich das Fahrzeugmodul auf das zweite Tor zu bewegt. Somit können Fehlöffnungen vermieden werden, wenn sich das Fahrzeug parallel zum ersten Tor und/oder zweiten Tor bewegt.

In einer bevorzugten Ausführungsform des nicht beanspruchten Schleusensicherheitssystems ist das erste Tormodul dazu eingerichtet, ein erstes Öffnungssignal zum Öffnen des ersten Tores bereitzustellen, wenn ermittelt wird, dass sich das Fahrzeugmodul auf das erste Tor zu bewegt, und wenn ermittelt wird, dass sich kein weiteres Fahrzeugmodul in der Schleuse befindet. Weiterhin bevorzugt ist das zweite Tormodul dazu eingerichtet, ein zweites Öffnungssignal zum Öffnen des zweiten Tores bereitzustellen, wenn ermittelt wird, dass sich das Fahrzeugmodul auf das zweite Tor zu bewegt, und wenn ermittelt wird, dass sich kein weiteres Fahrzeugmodul in der Schleuse befindet. Ein Einfahren eines zweiten Fahrzeugs in die Schleuse für den Fall, dass ein erstes Fahrzeug in der Schleuse angeordnet ist, kann vermieden werden. Hierdurch wird eine Kollision von Fahrzeugen innerhalb der Schleuse vermieden.

Es kann vorgesehen sein, dass das erste Tormodul dazu angepasst ist, ein erstes Öffnungssignal bereitzustellen, wenn ermittelt wird, dass sich das erste Fahrzeugmodul vom ersten Tor entfernt und sich ein zweites Fahrzeugmodul dem ersten Tor annähert. Es kann auch vorgesehen sein, dass das zweite Tormodul dazu angepasst ist, ein zweites Öffnungssignal bereitzustellen, wenn ermittelt wird, dass sich das erste Fahrzeugmodul vom zweiten Tor entfernt und sich das zweite Fahrzeugmodul dem zweiten Tor annähert. Auf diese Weise ist es möglich, Kollisionen zweier Fahrzeuge im Bereich des ersten und/oder zweiten Tores zu verhindern und eine effiziente Steuerung der Schleuse zu ermöglichen. Beispielsweise ist es möglich, dass mehrere Fahrzeuge die Schleuse in einer ersten Richtung durchfahren. Vorzugsweise ist das erste Tormodul dazu angepasst, ein erstes Öffnungssignal nur bereitzustellen, wenn ermittelt wird, dass sich alle Fahrzeugmodule in einer in etwa gleichen Richtung bewegen. Bevorzugt kann das zweite Tormodul analog ausgebildet sein.

In einer bevorzugten Ausgestaltung des nicht beanspruchten Schleusensicherheitssystems ist die erste Tor-Verarbeitungseinheit dazu eingerichtet, zu ermitteln, ob ein auf das erste Tormodul abgestimmtes Fahrzeugmodul von der ersten Tor-Warnzone in die zweite Tor-Warnzone übergegangen ist, und in Antwort auf ein solches Ermitteln an der ersten Torschnittstelle ein erstes Schließsignal zum Schließen des ersten Tores bereitzustellen, und die zweite Tor-Verarbeitungseinheit ist ebenso bevorzugt dazu eingerichtet, zu ermitteln, ob ein auf das zweite Tormodul abgestimmtes Fahrzeugmodul von der dritten Tor-Warnzone in die vierte Tor-Warnzone übergegangen ist, und in Antwort auf ein solches Ermitteln an der zweiten Torschnittstelle ein zweites Schließsignal zum Schließen des zweiten Tores bereitzustellen. Vorzugsweise sind die erste und zweite Tor-Warnzone auf gegenüberliegenden Seiten des ersten Tores sowie die dritte und vierte Tor-Warnzone auf gegenüberliegenden Seiten des zweiten Tores angeordnet, sodass ein Schließsignal bereitgestellt wird, wenn das Fahrzeugmodul in die Schleuse eingetreten oder aus der Schleuse herausgetreten ist. Vorzugsweise wird das erste Schließsignal bzw. das zweite Schließsignal nur bereitgestellt, wenn sich kein weiteres Fahrzeugmodul in der ersten Tor-Warnzone bzw. dritten Tor-Warnzone befindet. Vorzugsweise ist die erste Tor-Verarbeitungseinheit dazu eingerichtet, das erste Schließsignal nur bereitzustellen, wenn ermittelt wird, dass sich nur genau ein Fahrzeugmodul in der ersten TorWarnzone und der zweiten Tor-Warnzone befindet, und weiterhin bevorzugt ist die zweite Tor-Verarbeitungseinheit dazu eingerichtet, das zweite Schließsignal nur bereitzustellen, wenn ermittelt wird, dass sich nur genau ein Fahrzeugmodul in der dritten Tor-Warnzone und der vierten Tor-Warnzone befindet. Beispielsweise kann das erste und/oder zweite Tor in einem geöffneten Zustand gehalten werden, wenn ein erstes Fahrzeugmodul die Schleuse verlässt und ein zweites Fahrzeug mit einem darauf angebrachten zweiten Fahrzeugmodul daraufhin in die Schleuse einfahren soll.

In einer Variante ist die zweiten Tor-Warnzone auf einer dem zweiten Tor abgewandten Seite des ersten Tores angeordnet und die vierte Tor-Warnzone auf einer dem ersten Tor abgewandten Seite des zweiten Tores angeordnet, wobei die erste Tor-Verarbeitungseinheit dazu angepasst ist, eine erste Aufenthaltszeit eines ersten Fahrzeugmoduls in der zweiten Tor-Warnzone zu ermitteln und die erste Aufenthaltszeit an das zweite Tormodul zu senden, und wobei die zweite Tor-Verarbeitungseinheit dazu angepasst ist, eine zweite Aufenthaltszeit eines zweiten Fahrzeugmoduls in der vierten Tor-Warnzone zu ermitteln und die zweite Aufenthaltszeit an das erste Tormodul zu senden. Die zweite Tor-Warnzone und die vierte Tor-Warnzone weisen bevorzugt voneinander weg und sind auf äußeren Seiten der Tore angeordnet. Somit kann eine Aufenthaltszeit der Fahrzeugmodule vor der Schleuse überwacht werden. Bevorzugt wird die Aufenthaltszeit des ersten und/oder zweiten Fahrzeugmoduls nur ermittelt, wenn sich das erste Fahrzeugmodul auf das erste Tor zu bewegt und/oder das zweite Fahrzeugmodul auf das zweite Tor zu bewegt. Vorzugsweise ist die erste Tor-Verarbeitungseinheit dazu angepasst, das erste Öffnungssignal bereitzustellen, wenn die erste Aufenthaltszeit geringer als die zweite Aufenthaltszeit ist, während die zweite Tor-Verarbeitungseinheit dazu angepasst ist, das zweite Öffnungssignal bereitzustellen, wenn die zweite Aufenthaltszeit geringer als die erste Aufenthaltszeit ist. Hierdurch ist es möglich, Fahrzeugmodule nach deren Aufenthaltszeit zu priorisieren. Das Fahrzeugmodul, welches die längste Aufenthaltszeit in der zweiten bzw. vierten Tor-Warnzone hat, kann in die Schleuse eintreten. Es kann jedoch auch vorgesehen sein, dass die kürzeste Aufenthaltszeit priorisiert wird. Ebenso bevorzugt können die Tormodule dazu angepasst sein, mehrere Aufenthaltszeiten für mehrere Fahrzeugmodule zu ermitteln, und ein Öffnungssignal für das Fahrzeugmodul bereitzustellen, das eine mittlere oder anderweitig definierte Aufenthaltszeit in einer der Tor-Warnzonen aufweist. Bevorzugt ist die erste Tor-Antenne auf einer dem zweiten Tor zugewandten Seite des ersten Tores angeordnet, wobei die erste Tor-Antenneneinheit eine zweite Tor-Antenne aufweist, die auf einer dem zweiten Tor abgewandten Seite des ersten Tores angeordnet ist. Ebenso bevorzugt ist die vierte Tor-Antenne auf einer dem ersten Tor zugewandten Seite des zweiten Tores angeordnet, wobei die zweite Torantenneneinheit eine fünfte TorAntenne aufweist, die auf einer dem ersten Tor abgewandten Seite des zweiten Tores angeordnet ist. Dies ist besonders vorteilhaft, wenn das erste Tor und das zweite Tor zum Verschließen von Öffnungen in Wänden vorgesehen sind, die ein Ausbreiten von elektromagnetischen Feldern einschränken oder verhindern. Somit kann sichergestellt werden, dass sowohl ein Innenraum der Schleuse als auch Zufahrtsbereiche zur Schleuse von den Tor-Warnzone abgedeckt werden können.

In einer bevorzugten Ausführungsform des nicht beanspruchten Schleusensicherheitssystems ist die Fahrzeug-Verarbeitungseinheit dazu angepasst, eine vorgespeicherte Fahrzeug-ID an das erste Tormodul und/oder das zweite Tormodul zu senden. Vorzugsweise ist die erste Tor-Verarbeitungseinheit dazu angepasst, die empfangene Fahrzeug-ID mit einer vorgespeicherten Sicherheits-ID abzugleichen und das erste Öffnungssignal bereitzustellen, wenn die Fahrzeug-ID mit der Sicherheits-ID übereinstimmt. Ebenso ist die zweite Tor-Verarbeitungseinheit bevorzugt dazu angepasst, die empfangene Fahrzeug-ID mit einer vorgespeicherten Sicherheits-ID abzugleichen und das zweite Öffnungssignal bereitzustellen, wenn die Fahrzeug-ID mit der Sicherheits-ID übereinstimmt. Dadurch können mehrere vorteilhafte Sicherheitsfunktionen erfüllt werden. Beispielsweise können Fehlöffnungen des ersten und/oder zweiten Tores besonders effizient vermieden werden, wenn einem ersten Fahrzeugmodul, dass das erste Tor und/oder zweite Tor nicht durchfahren muss, kein Öffnen des ersten und/oder zweiten Tores verursachen kann, da dessen Fahrzeug-ID von der Sicherheit-ID abweicht. Ferner können auch Kollisionen von Fahrzeugen mit dem ersten oder zweiten Tor vermieden werden. Dazu kann vorgesehen sein, Fahrzeugmodule mit einer von der Sicherheits-ID abweichende Fahrzeug-ID an übergroßen Fahrzeugen anzubringen. Hierdurch kann erreicht werden, dass ein Öffnungssignal zum Öffnen eines Tores nur für Fahrzeuge bereitgestellt wird, deren Abmessungen ein kollisionsfreies Durchfahren des jeweiligen Tores erlauben. Weiterhin bevorzugt können Fahrzeugmodule, deren Fahrzeug-ID mit der Sicherheits-ID übereinstimmt, nur an Fahrzeugen angebracht werden, die bestimmte Sicherheitsmerkmale, wie beispielsweise Notbremssysteme oder Explosionsschutzeigenschaften, aufweisen. Es kann auch nur eine der Tor-Verarbeitungseinheiten zum Abgleichen einer Fahrzeug-ID mit einer Sicherheits-ID vorgesehen sein. Weiterhin bevorzugt ist die erste Tor-Verarbeitungseinheit dazu angepasst, die Empfangene Fahrzeug-ID nur mit der Sicherheits-ID abzugleichen, wenn sich das Fahrzeug in der ersten Tor-Warnzone oder der zweiten Tor-Warnzone befindet. Vorzugsweise wird eine Sicherheitsüberprüfung nur durchgeführt werden, wenn sich das Fahrzeug einem Tor aus einer bestimmten Richtung nähert. Beispielsweise kann ein Sicherheitsbereich von jedem Fahrzeug verlassen werden, während nur mit entsprechenden Modulen versehene Fahrzeuge durch ein Tor/eine Schleuse in den Bereich einfahren können.

Ferner offenbart wird ein nicht beanspruchtes Verfahren zum Verhindern von Kollisionen zwischen Fahrzeugen in einer Schleuse oder zwischen einem Fahrzeug und einer Schleuse vorzugsweise unter Verwendung eines Schleusensicherheitssystems gemäß der vorstehenden Offenbarung. Das Schleusensicherheitssystem weist vorzugsweise ein erstes Tor-Modul mit einer ersten Tor-Antenneneinheit, einer ersten Tor-Verarbeitungseinheit und einer ersten Torschnittstelle, ein zweites Tor-Modul mit einer zweiten Tor-Antenneneinheit, einer zweiten Tor-Verarbeitungseinheit und einer zweiten Torschnittstelle, und ein Fahrzeugmodul mit einer Fahrzeug-Antenneneinheit auf. Vorzugsweise ist das erste Fahrzeugmodul auf einem ersten Fahrzeug, insbesondere Stapler, montiert, das erste Tormodul ist benachbart zu einem ersten Tor, insbesondere Rolltor, montiert, und das zweite Tormodul ist benachbart zu einem zweiten Tor, insbesondere Rolltor, montiert, das mit dem ersten Tor eine Schleuse bildet, wobei das Verfahren die Schritte aufweist: Erzeugen eines ersten dreidimensionalen elektromagnetischen Feldes, unter Verwendung der ersten Tor-Antenneneinheit; Definieren einer ersten Tor-Warnzone für das erste Tor, die einen Teilbereich des ersten elektromagnetischen Feldes darstellt; Erzeugen eines dritten dreidimensionalen elektromagnetischen Feldes, unter Verwendung der zweiten Tor-Antenneneinheit; Definieren einer dritten Tor-Warnzone für das zweite Tor, die einen Teilbereich des dritten elektromagnetischen Feldes darstellt; Erzeugen eines zweiten dreidimensionalen elektromagnetischen Feldes, unter Verwendung der Fahrzeug-Antenneneinheit; Ermitteln, ob sich das Fahrzeugmodul innerhalb der ersten Tor-Warnzone befindet, unter Verwendung der ersten Tor-Verarbeitungseinheit; Senden einer Konfiguration der ersten Tor-Warnzone an die zweite Tor-Verarbeitungseinheit; Ermitteln, ob sich das Fahrzeugmodul innerhalb der dritten Tor-Warnzone befindet, unter Verwendung der zweiten Tor-Verarbeitungseinheit; und Senden einer Konfiguration der dritten Tor-Warnzone an die erste Tor-Verarbeitungseinheit.

Es soll verstanden werden, dass das zusätzlich zur Erfindung offenbarte, nicht beanspruchte Schleusensicherheitssystem und das zusätzlich offenbarte, nicht beanspruchte Verfahren gleiche und ähnliche Unteraspekte aufweisen. Insofern wird vollumfänglich auf die obige Beschreibung zum Schleusensicherheitssystem verwiesen. Weiterhin wird für gleiche und ähnliche Unteraspekte des Schleusensicherheitssystems vollumfänglich auf die obige Beschreibung zum Torsicherheitssystem gemäß dem ersten Aspekt der Erfindung Bezug genommen. In analoger Weise wird für gleiche oder ähnliche Unteraspekte des Verfahrens auf obige Beschreibung zum Verfahren gemäß dem zweiten Aspekt der Erfindung Bezug genommen.

Das Verfahren stellt einen Ablauf dar, bei dem eine gegenseitige Kommunikation des ersten Tormoduls mit dem zweiten Tormodul stattfindet. Beide Module sind aktiv und erkennen ein Eindringen eines Fahrzeugmoduls in die eigene Warnzone. Ferner erkennen die Tormodule durch das Empfangen der Konfiguration der Tor-Warnzone des jeweils anderen Tormoduls auch das Eindringen eines Fahrzeugmoduls in die Tor-Warnzone des jeweils anderen Tormoduls. Hierdurch kann die Sicherheit deutlich erhöht werden und das Auslösen von Fehlalarmen bzw. Fehlfolgeoperationen kann durch gegenseitige Plausibilisierung verhindert werden.

Vorzugsweise umfasst das Verfahren die Schritte: Ermitteln durch die erste Tor-Verarbeitungseinheit, unter Verwendung der Konfiguration der dritten Tor-Warnzone, ob sich das Fahrzeugmodul innerhalb der Schleuse befindet; und Ermitteln durch die zweite Tor-Verarbeitungseinheit, unter Verwendung der Konfiguration der ersten Tor-Warnzone, ob sich das Fahrzeugmodul innerhalb der Schleuse befindet. Es soll verstanden werden, dass die Tor-Verarbeitungseinheiten auch dazu angepasst sind, unter Verwendung der jeweils eigenen Tor-Warnzone zu ermitteln, ob sich das Fahrzeugmodul innerhalb der Schleuse befindet. Beispielsweise kann die erste Tor-Verarbeitungseinheit unter Verwendung der Konfigurationen der ersten Tor-Warnzone ermitteln, ob sich ein erstes Fahrzeugmodul in der Schleuse befindet, und in diesem Fall die Konfiguration der ersten Tor-Warnzone an das zweite Tormodul senden, sodass die zweite Tor-Verarbeitungseinheit ebenfalls ermittelt, dass sich das erste Fahrzeugmodul innerhalb der Schleuse befindet. Es kann vorgesehen sein, dass die erste Tor-Warnzone und die dritte Tor-Warnzone überlappend ausgebildet sind, sodass in vorteilhafter Weise eine Redundanz erreicht werden kann, wodurch die Sicherheit weiter erhöht wird.

Ferner umfasst das Verfahren vorzugsweise die Schritte: Bereitstellen eines ersten Zustandssignals, das einen ersten Öffnungszustand des ersten Tores angibt, an der ersten Torschnittstelle der ersten Tor-Verarbeitungseinheit; Ermitteln durch die erste Tor-Verarbeitungseinheit, unter Verwendung des ersten Zustandssignals, ob sich das erste Tor in einem geöffneten oder geschlossenen Zustand befindet; Senden des ermittelten Torzustands des ersten Tores an die zweite Tor-Verarbeitungseinheit; Bereitstellen eines zweiten Zustandssignals, das einen zweiten Öffnungszustand des zweiten Tores angibt, an der zweiten Torschnittstelle der zweiten Tor-Verarbeitungseinheit; Ermitteln durch die zweite Tor-Verarbeitungseinheit, unter Verwendung des zweiten Zustandssignals, ob sich das zweite Tor in einem geöffneten oder geschlossenen Zustand befindet; Senden des ermittelten Torzustands des zweiten Tores an die erste Tor-Verarbeitungseinheit. Die Tor-Verarbeitungseinheiten sind also jeweils dazu angepasst, zu erkennen, in welchem Zustand sich das andere Tor der Schleuse befindet. Es soll verstanden werden, dass die Schleuse auch mehr als zwei Tore aufweisen kann und, dass die Tor-Verarbeitungseinheiten dann dazu angepasst sind, die Torzustände aller Tore zu ermitteln.

Vorzugsweise umfasst das Verfahren ferner die Schritte: Bereitstellen eines ersten Öffnungssignals an der ersten Torschnittstelle der ersten Tor-Verarbeitungseinheit, wenn ermittelt wird, dass sich das zweite Tor in einem geschlossenen Zustand befindet; und/oder Bereitstellen eines zweiten Öffnungssignals an der zweiten Torschnittstelle der zweiten Tor-Verarbeitungseinheit, wenn ermittelt wird, dass sich das erste Tor in einem geschlossenen Zustand befindet. Ein Öffnen des ersten und zweiten Tores erfolgt also nur, wenn das jeweils andere Tor geschlossen ist. Hierdurch kann vermieden werden, dass ein erstes Fahrzeug durch das erste Tor in die Schleuse einfährt und zeitgleich ein zweites Fahrzeug durch das zweite Tor in die Schleuse einfährt. Darüber hinaus erfolgt das Öffnen des ersten Tores nicht allein basierend auf dem Zustand des ersten Tores, sondern es ist ein Signal vom zweiten Tor erforderlich.

Weiterhin bevorzugt umfasst das Verfahren die Schritte: Definieren einer ersten FahrzeugWarnzone für das Fahrzeug, die einen Teilbereich des zweiten elektromagnetischen Feldes darstellt; Ermitteln, ob sich das erste Tormodul innerhalb der ersten Fahrzeug-Warnzone befindet, unter Verwendung der Fahrzeug-Verarbeitungseinheit; Senden einer Konfiguration der ersten Fahrzeug-Warnzone an die erste Tor-Verarbeitungseinheit, wenn sich das erste Tormodul in der ersten Fahrzeug-Warnzone befindet; Ermitteln, unter Verwendung einer Konfiguration der ersten Tor-Warnzone, eine Fahrtrichtung des Fahrzeugs relativ zum ersten Tor; und/oder Ermitteln, ob sich das zweite Tormodul innerhalb der ersten Fahrzeug-Warnzone befindet, unter Verwendung der Fahrzeug-Verarbeitungseinheit; Senden einer Konfiguration der ersten Fahrzeug-Warnzone an die zweite Tor-Verarbeitungseinheit, wenn sich das zweite Tormodul in der ersten Fahrzeug-Warnzone befindet; Ermitteln, unter Verwendung einer Konfiguration der ersten Tor-Warnzone, eine Fahrtrichtung des Fahrzeugs relativ zum ersten Tor. Durch den Abgleich der Tor-Warnzone mit der Fahrzeug-Warnzone kann ermittelt werden, in welche Richtung sich das Fahrzeug bewegt, und daraus kann ermittelt werden, ob das Fahrzeug durch das Tor fahren wird.

Ferner umfasst das Verfahren die Schritte: Ermitteln, ob sich ein auf die erste und zweite Tor-Antenneneinheit abgestimmtes zweites Fahrzeugmodul, welches an einem zweiten Fahrzeug montiert ist, innerhalb der ersten Schleuse befindet, unter Verwendung der ersten Tor-Verarbeitungseinheit; und Ermitteln, ob sich ein auf die erste und zweite Tor-Antenneneinheit abgestimmtes zweites Fahrzeugmodul, welches an einem zweiten Fahrzeug montiert ist, innerhalb der Schleuse befindet, unter Verwendung der zweiten Tor-Verarbeitungseinheit. Vorzugsweise wird das erste Öffnungssignal und/oder das zweite Öffnungssignal für das erste Fahrzeugmodul nur bereitgestellt, wenn ermittelt wird, dass sich kein zweites Fahrzeugmodul Inhalt der Schleuse befindet. Ein Tor wird also nur geöffnet, wenn die Schleuse unbesetzt ist und sich ein Fahrzeug von außerhalb der Schleuse auf das entsprechende Tor zu bewegt oder wenn das Fahrzeug die Schleuse verlässt.

Vorzugsweise umfasst das Verfahren ferner die Schritte: Erzeugen eines vierten dreidimensionalen Feldes, unter Verwendung einer zweiten Fahrzeug-Antenneneinheit des zweiten Fahrzeugmoduls; Definieren einer zweiten Fahrzeug-Warnzone für das zweite Fahrzeug, die einen Teilbereich des vierten elektromagnetischen Feldes darstellt; Ermitteln, ob sich das erste Tormodul innerhalb der zweiten Fahrzeug-Warnzone befindet, unter Verwendung der zweiten Fahrzeug-Verarbeitungseinheit; Senden einer Konfiguration der zweiten Fahrzeug-Warnzone an die erste Tor-Verarbeitungseinheit, wenn sich das erste Tormodul in der zweiten Fahrzeug-Warnzone befindet; Ermitteln, unter Verwendung einer Konfiguration der ersten Tor-Warnzone, eine Fahrtrichtung des zweiten Fahrzeugs relativ zum ersten Tor; und/oder Ermitteln, ob sich das zweite Tormodul innerhalb der zweiten Fahrzeug-Warnzone befindet, unter Verwendung der zweiten Fahrzeug-Verarbeitungseinheit. Senden einer Konfiguration der zweiten Fahrzeug-Warnzone an die zweite Tor-Verarbeitungseinheit, wenn sich das zweite Tormodul in der zweiten Fahrzeug-Warnzone befindet; Ermitteln, unter Verwendung einer Konfiguration der ersten Tor-Warnzone, eine Fahrtrichtung des zweiten Fahrzeugs relativ zum zweiten Tor. Vorzugsweise wird das erste Öffnungssignal nur für den Fall bereitgestellt, dass ermittelt wird, dass sich das erste Fahrzeugmodul auf das erste Tor zu bewegt und sich das zweite Fahrzeugmodul von dem ersten Tor entfernt, und/oder vorzugsweise wird das zweite Öffnungssignal nur für den Fall bereitgestellt, dass ermittelt wird, dass sich das erste Fahrzeugmodul auf das zweite Tor zu bewegt und sich das zweite Fahrzeugmodul von dem zweiten Tor entfernt. Ein Tor kann somit für ein zweites Fahrzeug geöffnet werden, wenn sich das erste Fahrzeug zeitgleich von dem Tor entfernt. In diesem Fall besteht nur geringe Kollisionsgefahr, so dass unnötige Wartezeiten vermieden werden können.

Ferner kann das Verfahren die folgenden Schritte umfassen: Senden eines Bremssignals von der ersten Tor-Verarbeitungseinheit an das erste Fahrzeugmodul, wenn ermittelt wird, dass sich ein zweites Fahrzeugmodul innerhalb der Schleuse befindet; und/oder Senden eines Bremssignals von der zweiten Tor-Verarbeitungseinheit an das erste Fahrzeugmodul, wenn ermittelt wird, dass sich ein zweites Fahrzeugmodul innerhalb der Schleuse befindet. Somit kann vermieden werden, dass sich ein zweites Fahrzeugmodul im Bereich der Schleuse bewegt, während ein erstes Fahrzeug die Schleuse durchfährt. Besonders bevorzugt wird das Bremssignal nur gesendet, wenn ermittelt wird, dass sich das erste Fahrzeugmodul auf ein Tor zubewegt. Ebenso bevorzugt wird das Bremssignal nur gesendet, wenn sich das erste Fahrzeugmodul und das zweite Fahrzeugmodul aus entgegengesetzten Richtungen einem Tor annähern.

In einer bevorzugten, nicht beanspruchten Ausgestaltung umfasst das Verfahren die Schritte: Senden einer vorgespeicherten Fahrzeug-ID an das erste Tormodul, Abgleichen der Fahrzeug-ID mit einer vorgespeicherten Sicherheits-ID, unter Verwendung der ersten Tor-Verarbeitungseinheit; Bereitstellen des ersten Öffnungssignals, wenn die Fahrzeug-ID mit der Sicherheits-ID übereinstimmt; und/oder Senden einer vorgespeicherten Fahrzeug-ID an das zweite Tormodul; Abgleichen der Fahrzeug-ID mit einer vorgespeicherten Sicherheits-ID, unter Verwendung der zweiten Tor-Verarbeitungseinheit, Bereitstellen des zweiten Öffnungssignals, wenn die Fahrzeug-ID mit der Sicherheits-ID übereinstimmt. Hierdurch wird ein Tor nur geöffnet, wenn ein Fahrzeug zum Durchfahren der Schleuse berechtigt ist. Ein versehentliches Einfahren in Sicherheitsbereiche und/oder in Engstellen kann vermieden werden. Ferner wird ein Computerprogramm offenbart, umfassend Befehle, die bewirken, dass das Schleusensicherheitssystem gemäß einer der vorstehend beschriebenen bevorzugten, jedoch nicht beanspruchten

Ausführungsformen eines Schleusensicherheitssystems die Verfahrensschritte des Verfahrens gemäß einer der vorstehend beschriebenen bevorzugten Ausführungsformen eines Verfahrens der Erfindung ausübt.

Es soll verstanden werden, dass Merkmale der Tormodule und/oder der Fahrzeugmodule des zusätzlich offenbarten Schleusensicherheitssystems gleich oder ähnlich zu Merkmalen der Tormodule und/oder Fahrzeugmodule des Torsicherheitssystems gemäß dem ersten Aspekt der Erfindung ausgebildet sein können, wie sie insbesondere in den Ansprüchen dargelegt sind, weshalb vollumfänglich auf obenstehende Beschreibung Bezug genommen wird.

Ausführungsformen der Erfindung und der weiteren Offenbarung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: eine Draufsicht auf ein Fahrzeug mit einem Fahrzeugmodul und einer ersten, zweiten, dritten und vierten Fahrzeug-Warnzone;
- Figur 2: ein Fahrzeug mit sechs Warnzonen;
- Figur 3: ein Tor mit einem Tormodul und einer ersten und zweiten Tor-Warnzone;
- Figur 4: ein Tor mit einem Tormodul und insgesamt vier Fahrzeug-Warnzonen;
- Figur 5: die Interaktion von einem Fahrzeug mit einem Tor in einem ersten Ausführungsbeispiel;
- Figur 6A, 6B: die Interaktion eines Fahrzeugs mit einem Tor in einem zweiten Ausführungsbeispiel;
- Figur 7: in schematischer Weise den Aufbau des Tormoduls und des Fahrzeugmoduls;
- Figur 8: eine Schleuse mit einem ersten Tor, einem zweiten Tor, einer ersten Tor-Warnzone und einer dritten Tor-Warnzone;
- Figur 9: ein Schleusensicherheitssystem gemäß einem vierten, nicht beanspruchten Ausführungsbeispiel mit einem ersten Tormodul, das eine erste und zweite Tor-Warnzone definiert, und einem zweiten Tormodul, das eine dritte und vierte Tor-Warnzone definiert;
- Figur 10: ein Schleusensicherheitssystem gemäß einem fünften, nicht beanspruchten Ausführungsbeispiel, das ferner ein zweites Fahrzeugmodul umfasst;
- Figur 11A bis 11D: die Interaktion zweier Fahrzeuge mit einer Schleuse und einem Schleusensicherheitssystem gemäß dem fünften Ausführungsbeispiel;
- Figur 12: eine Variante des Schleusensicherheitssystems gemäß dem fünften Ausführungsbeispiel; und
- Figur 13: in schematischer Weisen den Aufbau des ersten Tormoduls, des weiten

Tormoduls und des Fahrzeugmoduls eines nicht beanspruchten Schleusensicherheitssystems.

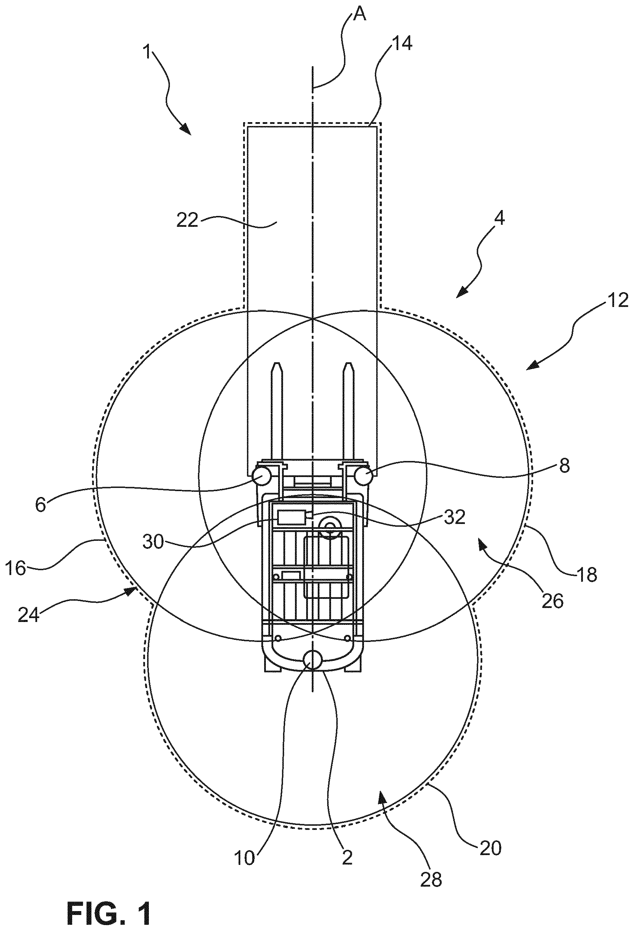

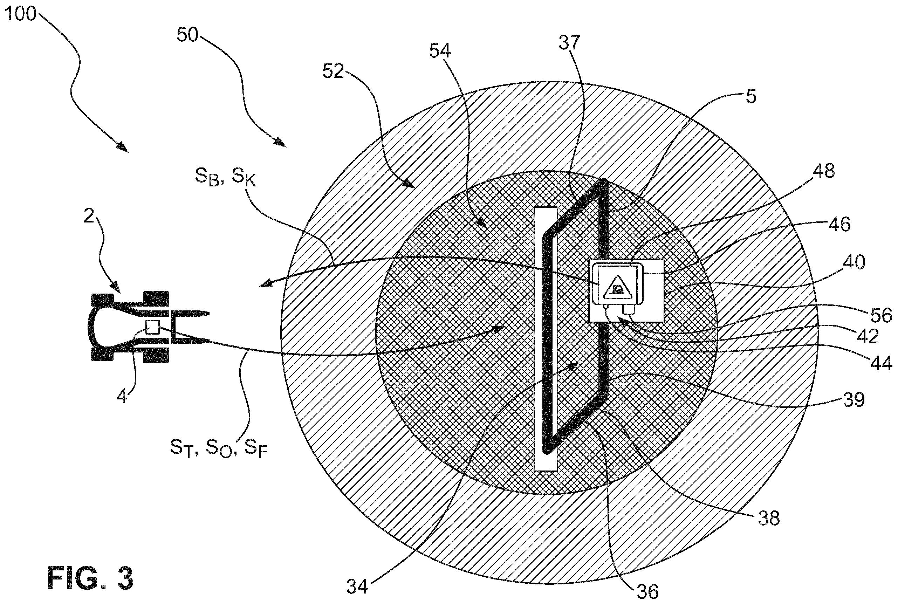

Gemäß Figur 1 umfasst ein Fahrzeugsystem 1 ein Fahrzeug 2, hier einen Stapler, sowie ein Fahrzeugmodul 4. Auch wenn das Fahrzeug 2 hier als Stapler dargestellt ist, soll verstanden werden, dass es an allen Arten von Fahrzeugen eingesetzt werden kann, insbesondere auch autonomen, FTS, Radladern, PKWs, LKWs, etc. Das Fahrzeug 2 ist hiervon oben dargestellt und in Form eines Gabelstaplers. Gabelstapler werden vielfach eingesetzt und gerade hier hat es sich gezeigt, dass Unfälle mit Toren 5 (vgl. Fig. 3) verhältnismäßig häufig auftreten. Das Fahrzeugmodul 4 weist eine Fahrzeug-Antenneneinheit 7 mit einer ersten Fahrzeug-Antenne 6, einer zweiten Fahrzeug-Antenne 8 und einer dritten FahrzeugAntenne 10 auf. Die ersten und zweiten Fahrzeug-Antennen 6, 8 sind dabei an linken und rechten Ecken der Front des Fahrzeugs 2, und die dritte Fahrzeug-Antennen 10 ist am Heck des Fahrzeugs 2 angeordnet. Gemeinsam bilden die ersten, zweiten und dritten Fahrzeug-Antennen 6, 8, 10 eine Fahrzeug-Antenneneinheit 12. Die Fahrzeug-Antenneneinheit 12 überwacht einen Fahrzeugüberwachungsbereich 14 (Fahrzeug-Gesamtwarnzone 14), der hier durch die gestrichelte Linie dargestellt ist. Alle drei Fahrzeug-Antennen 6, 8, 10 spannen jeweils ein kugelförmiges elektromagnetisches Feld auf 16, 18, 20, welches schematisch durch die Kreise illustriert ist. Die Kreise illustrieren nur das elektromagnetische Feld 16, 18, 20, es soll aber verstanden werden, dass die tatsächliche Reichweite der Fahrzeug-Antennen 6, 8, 10 wesentlich größer ist und in der Realität bis zu 200 Meter betragen kann. Zu berücksichtigen sind allerdings Abschirmeffekte, die durch das Fahrzeug 2 oder eine entsprechende Ladung des Fahrzeugs 2 verursacht werden können.

Die Fahrzeug-Gesamtwarnzone 14 weist gemäß diesem Ausführungsbeispiel eine erste Fahrzeug-Warnzone 22 auf, die sich von der Fahrzeugfront im Wesentlichen in Richtung der Längsachse A des Fahrzeugs 2 in Fahrtrichtung erstreckt. Ferner weist die Fahrzeug-Gesamtwarnzone 14 eine zweite Fahrzeug-Warnzone 24, eine dritte Fahrzeug-Warnzone 26 und eine vierte Fahrzeug-Warnzone 28 auf. Die zweiten und dritten Fahrzeug-Warnzonen 24, 26 sind seitlich des Fahrzeugs 2 angeordnet, die vierte Fahrzeug-Warnzone 28 ist am Heck des Fahrzeugs 2 angeordnet. Die zweiten, dritten und vierten Fahrzeug-Warnzonen 24, 26, 28 sind im Vergleich zur ersten Fahrzeug-Warnzone 22 schmal ausgeführt. Das Fahrzeug 2 wird sich im Regelfall nach vorne in Fahrtrichtung bewegen, sodass die Seiten- und Heckbereiche mit den zweiten, dritten und vierten Fahrzeug-Warnzonen 24, 26, 28 schmal ausgeführt sein können.

Das Fahrzeugmodul 4 umfasst weiterhin eine Fahrzeug-Verarbeitungseinheit 30, die mit den ersten, zweiten und dritten Fahrzeug-Antennen 6, 8, 10 verbunden ist, um die elektromagnetischen Felder 16, 18, 20 aufzuspannen. Die Fahrzeug-Verarbeitungseinheit 30 hat eine Fahrzeugschnittstelle 32, um mit einer Fahrzeugsteuerung oder anderen Einheiten des Fahrzeugs 2 zu kommunizieren.

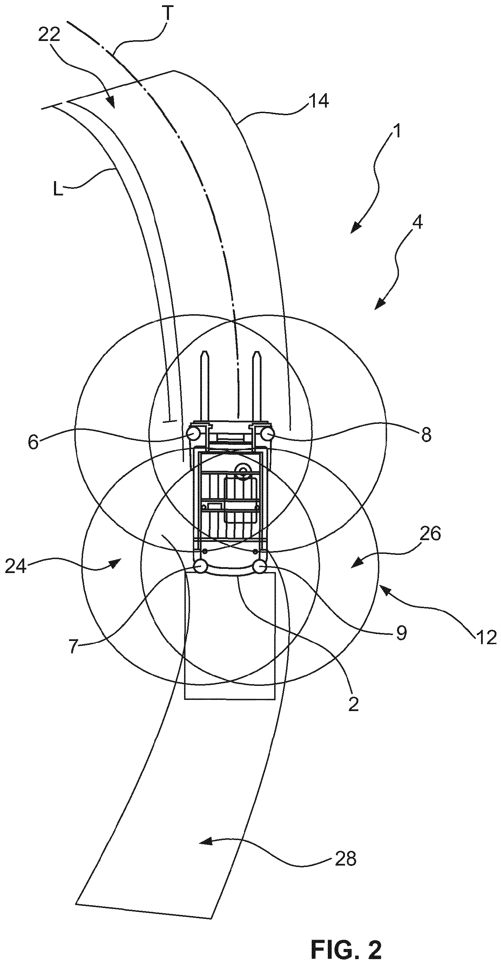

In einer Variante zu Figur 1 zeigt Figur 2 ein Fahrzeugmodul 4, das insgesamt 4 Fahrzeug-antennen 6, 8, 7, 9 umfasst, die zur Überwachung der Fahrzeug-Gesamtwarnzone 14 dienen. Zusätzlich kann eine weitere Antenne zum Stummschalten eines Teilbereichs der ersten Fahrzeug-Gesamtwarnzone 14 vorgesehen sein. Im Unterschied zum ersten Ausführungsbeispiel sind gemäß diesem Ausführungsbeispiel (Fig. 2) zwei Fahrzeug-Antennen 7, 9 am Heck des Fahrzeugs 2 angeordnet, und zwar ebenso an Ecken des Fahrzeugs 2, sodass die vier Fahrzeug-Antennen 6, 8, 7, 9 insgesamt ein Rechteck darstellen. Figur 2 zeigt zudem eine Warnzonenkonfiguration, wie sie bei hohen Geschwindigkeiten und Kurvenfahrten bevorzugt ist. Die erste Fahrzeug-Warnzone 22 ist in Fahrtrichtung langgestreckt und leicht nach links ausgerichtet, um eine Kurven-Trajektorie T des Fahrzeugs 2 abzudecken. Wird beispielsweise mittels eines Lenkwinkelsensors erkannt, dass das Fahrzeug 2 entlang der Trajektorie T mit Bezug auf die Figur 2 nach links abbiegen will, ist es bevorzugt, die erste Fahrzeug-Warnzone 22, wie in Figur 2 gezeigt, auszubilden, das heißt vorzugsweise mit der Trajektorie T zu bewegen, um den Bereich abzudecken, in dem das Fahrzeug 2 in naher Zukunft sein wird. Eine Länge L der ersten Fahrzeug-Warnzone 2, kann beispielsweise das 2,5-Fache der Fahrzeuglänge umfassen, oder beispielsweise etwa mit Bezug auf die Fahrtgeschwindigkeit des Fahrzeugs 2 die nächsten 2 bis 10 Sekunden abdecken.

Weiterhin ist auch am Heck des Fahrzeugs 2 eine, hier fünfte, Fahrzeug-Warnzone 28 vorgesehen, die ebenfalls im Wesentlichen rechteckig ausgebildet ist. Die fünfte FahrzeugWarnzone 28 kann beispielsweise nur bei Rückwärtsfahrt des Fahrzeugs 2 aktiviert werden.

In Figur 3 ist zunächst nur schematisch ein Tor 5 illustriert, welches beispielsweise ein Rolltor einer Lagerhalle sein kann. Das Tor 5 weist eine Toröffnung 34 auf sowie einen Torrahmen 36. Der Torrahmen 36 weist erste und zweite vertikale Streben 37, 38 auf, die parallel zueinander angeordnet sind und eine horizontalte Querstrebe 40. Oberhalb der Querstrebe 40 ist in diesem Ausführungsbeispiel ein Querbalken 39, ein Tormodul 40 angeordnet. Das Tormodul 40 umfasst eine Tor-Antenneneinheit 42 mit einer ersten Tor-Antenne 44 sowie eine Tor-Verarbeitungseinheit 46. Die Tor-Verarbeitungseinheit 46 ist hier gemeinsam mit der Tor-Antenneneinheit 42 in ein Gehäuse 48 eingesetzt, welches dann samt der Tor-Antenneneinheit 42 und der Tor-Verarbeitungseinheit 46 beispielsweise mittig oberhalb des Querbalkens 39 montiert werden kann, um die erste Tor-Antenne 44 in einer vorbestimmten räumlichen Beziehung zu dem Torrahmen 36 des Tores 5 zu montieren.

Die Tor-Antenneneinheit 42 ist dazu eingerichtet, ein erstes dreidimensionales elektromagnetisches Feld 50 zu erzeugen, das eine Wellenlänge von 780 nm oder mehr aufweist. Die Tor-Verarbeitungseinheit 46 erzeugt in diesem Ausführungsbeispiel (Fig. 3) eine erste TorWarnzone 52, und eine zweite Tor-Warnzone 54. Beide Tor-Warnzonen 52, 54 sind in diesem Ausführungsbeispiel in einer Projektion kreisförmig, da die Tor-Antenneneinheit 42 in diesem Ausführungsbeispiel nur eine einzige erste Tor-Antenne 44 umfasst. Die erste TorWarnzone 52 ist größer als die zweite Tor-Warnzone 54, wobei die beiden Tor-Warnzonen 52, 54 konzentrisch zueinander ausgebildet sind. Das heißt, wenn sich ein Fahrzeug 2 dem Tor 5 nähert, kommt das Fahrzeugmodul 4 zunächst in die erste Tor-Warnzone 52 und anschließend in die zweite Tor-Warnzone 54. Vorzugsweise ist vorgesehen, dass der ersten Tor-Warnzone 52 ein erster Tor-Aktivitätssatz mit mindestens einer ersten Tor-Folgeoperation und ein zweiter Tor-Aktivitätssatz mit mindestens einer zweiten Tor-Folgeoperation zugeordnet ist. Eine solche Tor-Folgeoperation kann beispielsweise ein Aufblinken einer Signallampe an dem Tormodul 40 umfassen, oder auch das Aktivieren der zweiten TorWarnzone 54. Beispielsweise kann vorgesehen sein, dass der erste Tor-Aktivitätssatz aktiviert ist, wenn kein Fahrzeugmodul 4 in der ersten Tor-Warnzone 52 ermittelt wird, wie beispielsweise in Figur 3 dargestellt. Tritt dann das Fahrzeugmodul 4 in die erste TorWarnzone 52 ein, weil sich das Fahrzeug 2 weiter in Richtung des Tores 5 bewegt, kann der zweite Tor-Aktivitätssatz aktiviert werden. Das Tormodul 40 sendet ein Konfigurationssignal SK, das die Konfiguration der ersten Tor-Warnzone 52 anzeigt, an das Fahrzeugmodul 4. Auch ist es denkbar, dass beispielsweise von dem Tormodul 40 ein Bremssignal SB, oder ein Konfigurationssignal SK, das die Konfiguration der zweiten Tor-Warnzone 54 anzeigt an das Fahrzeugmodul 4 gesendet wird. Basierend auf solchen Konfigurationssignalen SK ist es dann auch denkbar, dass das Fahrzeugmodul 4 selbsttätig bestimmt, ob es sich innerhalb der ersten und/oder zweiten Tor-Warnzone 52, 54 befindet.

Das Tormodul 40 weist ferner eine Torschnittstelle 56, zur Verbindung mit einer Steuerung des Tores 5 auf. Die Torsteuerung ist in den Figuren nicht dargestellt, aber dient in der Regel dazu, das Tor 5 zu öffnen und zu schließen. Über die Torschnittstelle 56 kann das Tormodul 40 auch einen Öffnungszustand des Tores 5 erhalten, vorzugsweise auch einen Öffnungsgrad sowie eine Öffnungsgeschwindigkeit.

Auch das Fahrzeugmodul 4 ist dazu vorgesehen, Signale an das Tormodul 40 zu senden. Das Fahrzeugmodul 4 kann beispielsweise ein Trajektorie-Signal ST bereitstellen, welches einen wahrscheinlichen Bewegungsweg des Fahrzeuges 2 umfasst, und basierend auf Beschleunigungssensoren, Lenkwinkelsensoren, Geschwindigkeitssensoren oder dergleichen, ermittelt wird. Auch ist es denkbar, dass das Fahrzeug GPS-Sensoren oder dergleichen umfasst. Das Fahrzeugmodul 4 kann auch ein Öffnungssignal SO an das Tormodul 40 senden, beispielsweise dann, wenn das Fahrzeugmodul 4 ermittelt, dass ein Tormodul 40 innerhalb der ersten Fahrzeug-Warnzone 22 ist. Das Fahrzeugmodul 4 kann ferner dazu eingerichtet sein, eine Fahrzeug-Warnzonenkonfiguration SF an das Tormodul 40 zu senden.

Gemeinsam bilden das Tormodul 40 und das Fahrzeugmodul 4 ein Torsicherheitssystem 100.

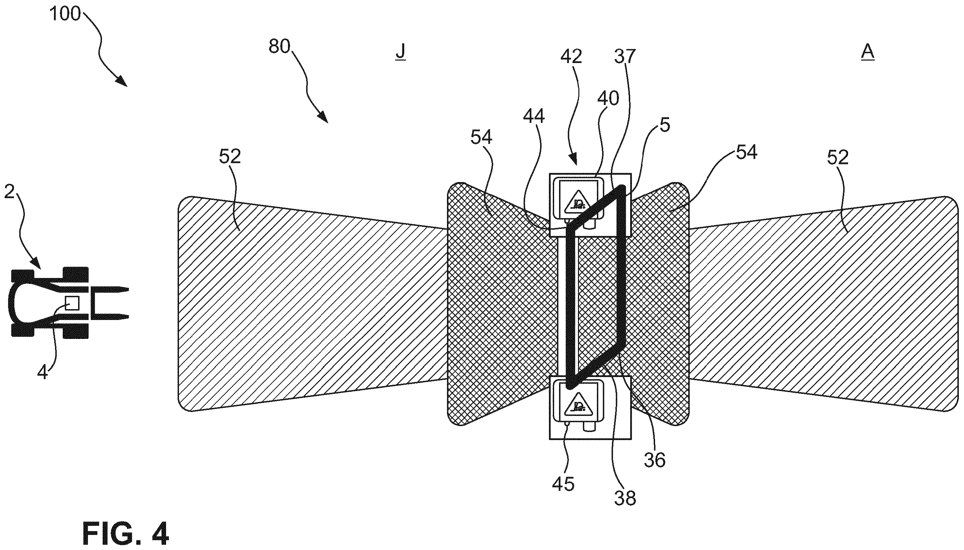

Figur 4 zeigt eine Variante der Figur 3. Das in Figur 4 dargestellte Ausführungsbeispiel unterscheidet sich von dem in Figur 3 dargestellten dadurch, dass die Tor-Antenneneinheit 42 eine erste Tor-Antenne 44 und eine zweite Tor-Antenne 45 aufweist. Die erste TorAntenne 44 ist an dem ersten vertikalen Träger 37 und die zweite Tor-Antenne im zweiten vertikalen Träger 38 des Torrahmens 36 angeordnet. Auf diese Weise ist es möglich, dass die ersten und zweiten Tor-Warnzonen 52, 54 eine von einer Kreisform abweichende Form aufweisen, in dieser Ausführungsform nämlich im Wesentlichen trapezförmig, wobei sich die jeweiligen Trapeze in Richtung weg von dem Tor 5 aufweiten. Wiederum ist die erste Tor-Warnzone 52 größer als die zweite Tor-Warnzone 54, bzw. ist weiter weg vom Tor 5. Wenn zwei Tor-Antennen 44, 45 vorhanden sind, kann noch nicht unterschieden werden, ob sich bei Detektion eines Fahrzeugmoduls 4 in der ersten Tor-Warnzone 52 das Fahrzeugmodul innerhalb I oder außerhalb A der Halle befindet, in deren Hallenwand das Tor 5 eingebaut ist. Zu diesem Zweck kann eine dritte Tor-Antenne vorgesehen sein (nicht gezeigt), die nicht in der durch das Tor 5 definierten Ebene angeordnet ist, sondern mit Bezug auf Fig. 4 beispielsweise in Höhe des Fahrzeugs 2. Auf diese Weise lässt sich dann durch Trigonometrie feststellen, ob das Fahrzeugmodul 4 innerhalb oder außerhalb des Tores 5 ist.

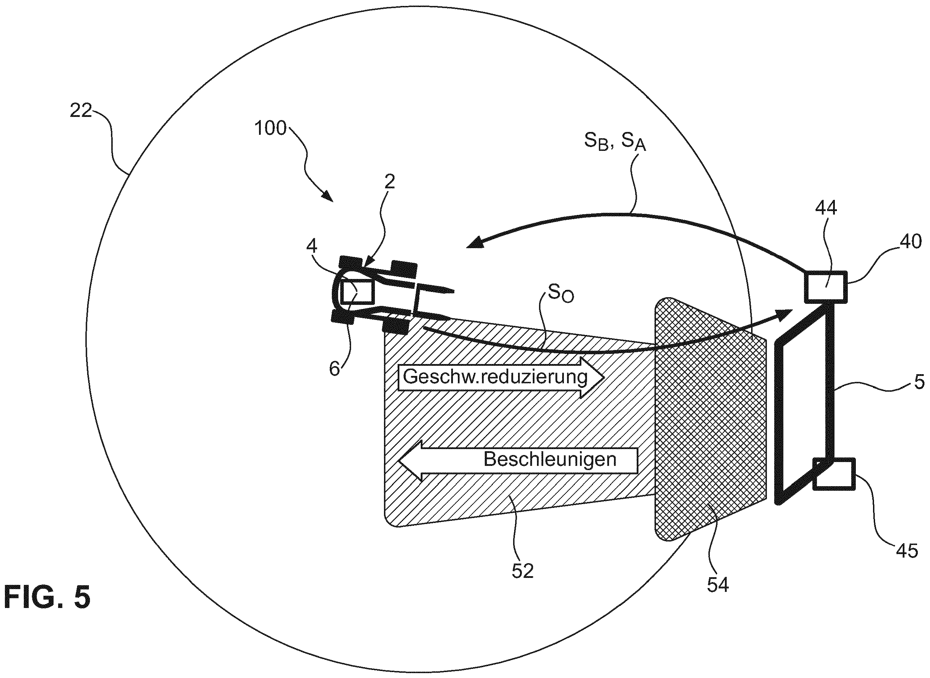

In dem in Figur 5 dargestellten Ausführungsbeispiel ist die erste Fahrzeug-Warnzone 22 kreisförmig, da in diesem Ausführungsbeispiel das Fahrzeugmodul 4 nur eine einzige Fahrzeug-Antenne 6 aufweist. Das Tormodul 40 ist wiederum mit zwei Tor-Antennen 44, 45 ausgestattet, sodass die erste Tor-Warnzone 52 und die zweite Tor-Warnzone 54 trapezförmig sind. In Figur 5 ist dargestellt, dass sich das Fahrzeug 2 in Richtung des Tores 5 bewegt und in die erste Tor-Warnzone 52 eintritt. Das Tormodul 40 ermittelt dies. Ferner ist das Tormodul 40 auch dazu eingerichtet zu ermitteln, dass sich das Fahrzeug 2 in Richtung des Tores 5 bewegt. Dies kann beispielsweise dadurch erfolgen, dass eine Signalstärke beobachtet wird, wobei ermittelt wird, dass das Fahrzeugmodul 4 in der ersten TorWarnzone 52 ist und die Signalstärke über die Zeit zunimmt, das Fahrzeugmodul 4 in Richtung des Tores 5 bewegt. Es kann vorgesehen sein, dass, sobald das Fahrzeugmodul 4 in die erste Tor-Warnzone 52 eintritt, und die Tor-Verarbeitungseinheit 46 insofern ermittelt, dass sich das Fahrzeugmodul 4 innerhalb der ersten Tor-Warnzone 52 befindet, ein Bremssignal SB von dem Tormodul 40 an das Fahrzeugmodul 4 gesendet wird. Sobald das Tormodul 40 ermittelt, dass sich das Fahrzeugmodul 4 von dem Tor 5 entfernt, wird das Bremssignal SB nicht mehr gesendet, oder es wird ein Beschleunigungssignal SA gesendet, welches das Beschleunigen des Fahrzeugs 2 erlaubt. In Figur 5 befindet sich das Fahrzeug 2 an einer Position, in der das Tormodul 40 noch nicht in der ersten FahrzeugWarnzone 22 ist. Sobald sich das Fahrzeug 2 weiter auf das Tor 5 zu bewegt, kommt das Tormodul 40 in die erste Fahrzeug-Warnzone 22 und die Fahrzeug-Verarbeitungseinheit 30 ermittelt, dass sich das Tormodul 40 in der ersten Fahrzeug-Warnzone 22 befindet. Das Fahrzeugmodul 4 ist dann dazu ausgebildet, ein Öffnungssignal SO an das Tormodul 40 zu senden, welches seinerseits über die Torschnittstelle 56 ein entsprechendes Öffnungssignal an der Torsteuerung bereitstellt, um das Tor 5 zu öffnen. Auf diese Weise kommunizieren die beiden Module, das Fahrzeugmodul 4 und das Tormodul 40 miteinander und tauschen wechselseitig Signale aus.

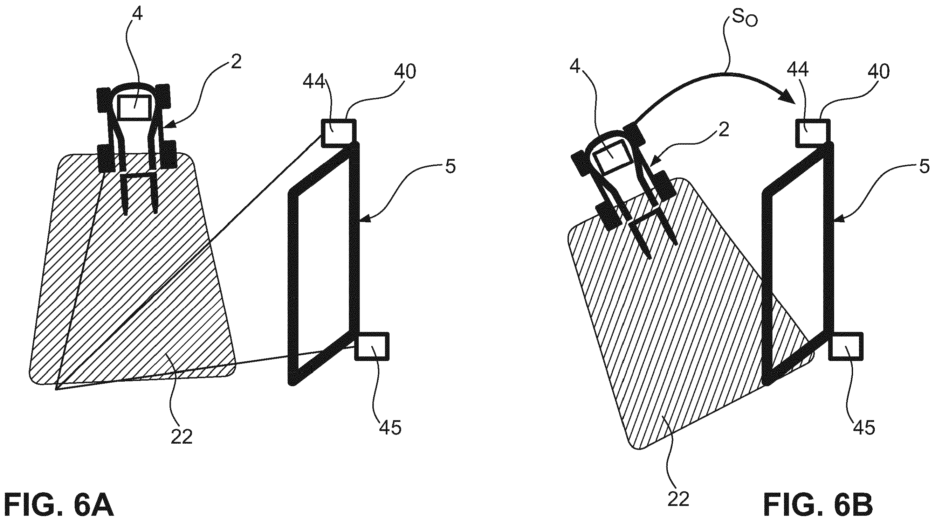

Die Figuren 6A, 6B illustrieren nun eine Variante, in der ein Fahrzeug 2 zunächst im Wesentlichen parallel zum Tor 5 fährt (vgl. Fig. 6A) und dann in Richtung des Tores 5 dreht. Die erste Fahrzeug-Warnzone 22 erstreckt sich langgestreckt an der Front des Fahrzeugs 2 und ist im Wesentlichen in Fahrtrichtung ausgerichtet. Sie ist in dieser Ausführungsform etwa trapezförmig, wobei sich das Trapez von der Front des Fahrzeugs 2 weg aufweitet. Fährt das Fahrzeug 2 im Wesentlichen parallel zum Tor 5, gerät das Tormodul 40 nicht in die erste Fahrzeug-Warnzone 22. Folglich sendet das Fahrzeugmodul 4 auch kein Öffnungssignal SO an das Tormodul 40. Dreht nun das Fahrzeug 2, wie in Figur 6B dargestellt, und kommt infolgedessen das Tormodul 40, in Figur 6B genauer gesagt die zweite Tor-Antenne 45, in die erste Fahrzeug-Warnzone 22, ermittelt die Fahrzeug-Verarbeitungseinheit 30, dass das Tormodul 40 in der ersten Fahrzeug-Warnzone 22 ist, und löst als Folgeoperation das Senden eines Öffnungssignals SO von dem Fahrzeugmodul 4 an das Tormodul 40 aus. Das Tormodul 40 stellt dann das Öffnungssignal SO oder ein davon abgeleitetes Signal an der Torschnittstelle 56 bereit und die Torsteuerung kann das Tor 5 öffnen.

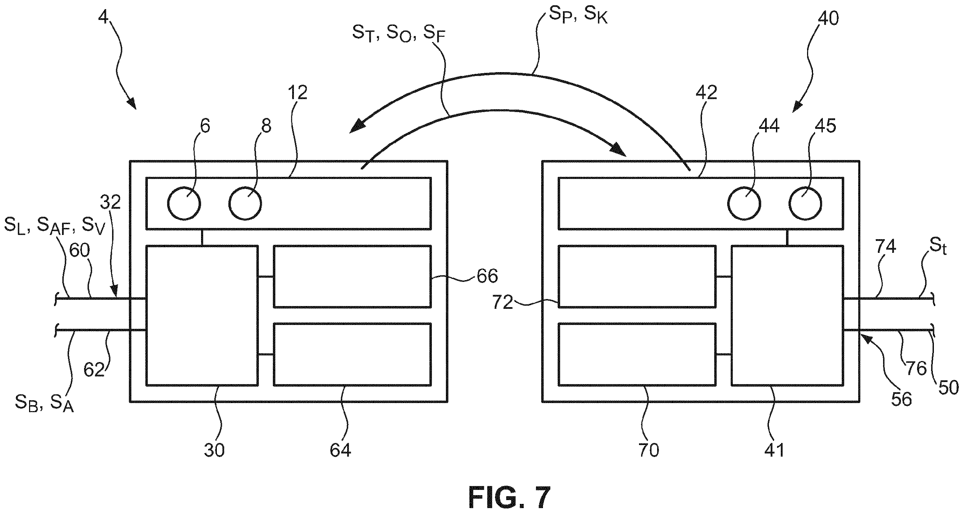

Figur 7 zeigt schematisch ein Fahrzeugmodul 4 und ein Tormodul 40. Das Fahrzeugmodul 4 weist, wie bereits vorher beschrieben, eine Antenneneinheit 12 auf, mit hier dargestellt einer ersten Fahrzeug-Antenne 6 und einer zweiten Fahrzeug-Antenne 8. Die Verarbeitungseinheit 30 ist mit der Antenneneinheit 12 verbunden und weist ferner eine Fahrzeugschnittstelle 32 auf. In diesem Ausführungsbeispiel ist die Fahrzeugschnittstelle 32 mit einer ersten Leitung 60 und einer zweiten Leitung 62 gezeigt, wobei die erste Leitung 60 zum Empfangen von Signalen, wie beispielsweise einem Lenkwinkelsignal SL, einem Beschleunigungssignal des Fahrzeugs SAF sowie einem Geschwindigkeitssignal des Fahrzeugs SV ausgebildet ist. Die zweite Leitung 62 ist zum Ausgeben von Signalen von dem Fahrzeugmodul 4 an das Fahrzeug 2 vorgesehen, wie beispielsweise das Bremssignal SB, das Beschleunigungssignal SA. Neben diesen Einheiten weist das Fahrzeugmodul 4 ferner einen Speicher 64 auf, in dem beispielsweise Konfigurationen für die erste und zweite Fahrzeug-Warnzone 22, 24, 26, 28 gespeichert sein können. Schließlich weist das Fahrzeugmodul 4 eine Ausgabeeinheit 66 auf, die beispielsweise optische und/oder akustische Signale ausgeben kann, zum Warnen eines Fahrers des Fahrzeugs 2.

In gleicher Weise weist das Tormodul 40 die Tor-Antenneneinheit 42, die Tor-Verarbeitungseinheit 46, eine Torspeichereinheit 70 und eine Torausgabeeinheit 72 auf. Die Torschnittstelle 56 weist wiederum eine erste Leitung 74 und eine zweite Leitung 76 auf, wobei die erste Leitung 74 zum Empfangen von Signalen von einer Torsteuerung ausgebildet ist, wie insbesondere ein Torzustandssignal. Die zweite Leitung 76 ist zum Ausgeben von Signalen an die Torsteuerung vorgesehen, wie beispielsweise ein Toröffnungssignal SO.

Die beiden Module, das Fahrzeugmodul 4 und das Tormodul 40 kommunizieren über Funk miteinander. So kann beispielsweise das Fahrzeugmodul 4 mittels der Antenneneinheit 12, oder einer weiteren Sende-/Empfangseinheit, die Signale ST, SO, SF an das Tormodul 40 senden, und das Tormodul 40 kann in gleicher Weise die Signale SB, SK an das Fahrzeugmodul 4 senden.

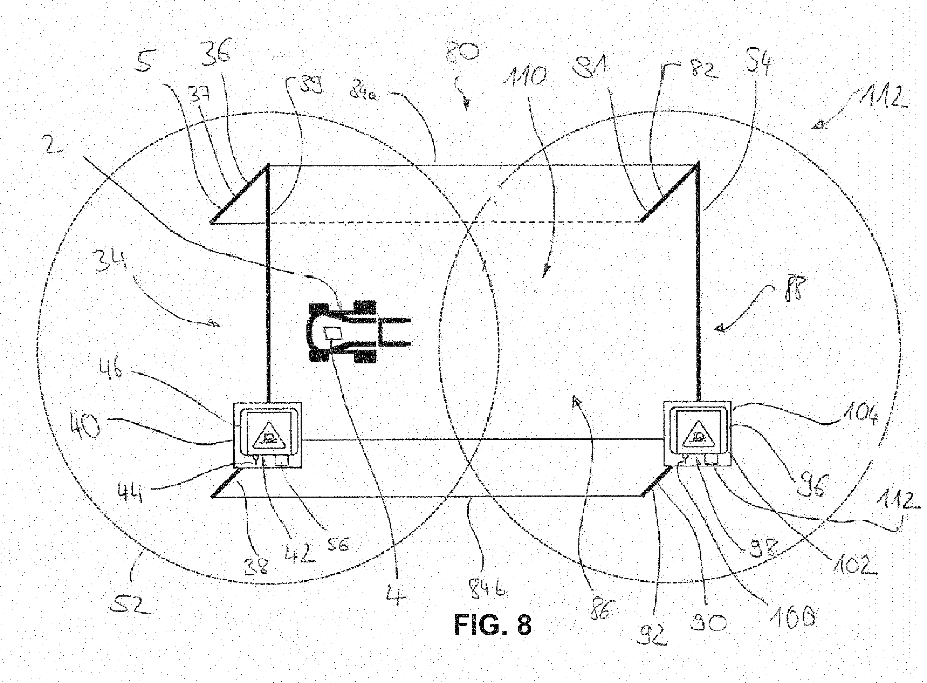

In Figur 8 ist eine Schleuse 80 illustriert, die von einem ersten Tor 5 und einem zweiten Tor 82 gebildet wird. Die Schleuse 80 weist ferner Seitenwände 84a, 84b auf, die die Schleuse 80 seitlich begrenzen und einen Innenraum 86 der Schleuse 80 definieren. Es soll verstanden werden, dass die Schleuse 80 auch durch andere Elemente, wie beispielsweise Zäune, begrenzt werden oder unbegrenzt ausgebildet sein kann.

Das erste Tor 5 weist eine Toröffnung 34 und einen Torrahmen 36 auf. In analoger Weise weist das zweite Tor 82 eine zweite Toröffnung 88 und einen zweiten Torrahmen 90 auf. Der zweite Torrahmen 90 wird von dritten und vierten vertikalen Streben 91, 92 und einem zweiten Querbalken 94 gebildet. Bevorzugt sind das erste Tor 5 und das zweite Tor 82 als Rolltore ausgebildet. Oberhalb der Querstrebe 39 des ersten Tores 5 ist ein erstes Tormodul 40 angeordnet, das eine erste Tor-Antenneneinheit 42 mit einer ersten Tor-Antenne 44 sowie eine erste Tor-Verarbeitungseinheit 46 aufweist. Oberhalb des zweiten Querbalkens 94 des zweiten Tores 82 ist ein zweites Tormodul 96 angeordnet, das eine zweite TorAntenneneinheit 98 mit einer vierten Tor-Antenne 100 und eine zweite Tor-Verarbeitungseinheit 102 aufweist. Die zweite Tor-Verarbeitungseinheit 102 und die zweite Tor-Antenneneinheit 98 sind hier in ein zweites Gehäuse 104 eingesetzt, welches dann beispielsweise mittig oberhalb des Querbalkens 94 montiert werden kann, um die vierte Tor-Antenne 100 in einer vorbestimmten räumlichen Beziehung zum zweiten Tor 82 zu montieren. Ferner weist das zweite Tormodul 96 eine zweite Torschnittstelle 112 auf, die zur Verbindung mit einer Steuerung des zweiten Tores 82 vorgesehen ist. Die Torsteuerung ist in den Figuren nicht dargestellt, aber dient in der Regel dazu, das zweite Tor 82 zu öffnen und zu schließen. Über die zweite Torschnittstelle 112 kann das zweite Tormodul 96 ein zweites Zustandssignal empfangen, das einen zweiten Öffnungszustand des zweiten Tores 82 angibt. Ferner kann das zweite Zustandssignal auch weitere Informationen, wie beispielsweise eine Öffnungsgeschwindigkeit oder Schadensmeldungen, enthalten. In analoger Weise ist das erste Tormodul 40 mittels der ersten Torschnittstelle 56 mit einer Torsteuerung (in den Figuren nicht dargestellt) des ersten Tores 5 verbunden.

Die erste Tor-Antenneneinheit 42 ist dazu eingerichtet, ein erstes dreidimensionales elektromagnetisches Feld 50 zu erzeugen (in Figur 8 nicht dargestellt) und die zweite Tor-Antenneneinheit 98 ist dazu eingerichtet, ein drittes dreidimensionales elektromagnetisches Feld 106 zu erzeugen (in Figur 8 nicht dargestellt), das eine Wellenlänge von 780 nm oder mehr aufweist. Die zweite Tor-Verarbeitungseinheit 102 erzeugt in diesem Ausführungsbeispiel eine dritte Tor-Warnzone 108, die mit einer ersten Tor-Warnzone 52, die von der ersten Tor-Verarbeitungseinheit 46 definiert wird, im Innenraum 86 der Schleuse 80 überlappt. Die dritte Tor-Warnzone 108 stellt einen Teilbereich des dritten dreidimensionalen elektromagnetischen Feldes 106 dar. Da die erste Tor-Antenneneinheit 42 und die zweite Tor-Antenneneinheit 98 in diesem Ausführungsbeispiel nur jeweils eine Tor-Antenne 44, 100 aufweisen, sind die erste Tor-Warnzone 52 und die dritte Tor-Warnzone 108 in einer Projektion kreisförmig ausgebildet. Vorzugsweise überlappen die erste Tor-Warnzone 52 und die dritte Tor-Warnzone 108 im Innenraum 86 der Schleuse 80 derart, dass eine Bodenfläche 110 der Schleuse 80 vollständig von den Tor-Warnzonen 52, 108 abgedeckt wird.

Ein Fahrzeug 2, das hier als Stapler dargestellt ist, weist ein auf die erste Tor-Antenneneinheit 42 und die zweite Tor-Antenneneinheit 98 abgestimmtes Fahrzeugmodul 4 auf. Hier ist das Fahrzeug 2 innerhalb der ersten Tor-Warnzone 52 im Innenraum 86 der Schleuse 80 angeordnet. Die erste Tor-Verarbeitungseinheit 46 ermittelt daher, unter Verwendung der ersten Tor-Antenneneinheit 44, dass sich das Fahrzeugmodul 4 innerhalb der ersten Tor-Warnzone 52 befindet. In Antwort auf ein solches Ermitteln, sendet das erste Tormodul 40 die Konfiguration der ersten Tor-Warnzone 52 an das zweite Tormodul 96. Die Information, dass sich ein Fahrzeug 2 im Bereich der Schleuse 80 befindet, liegt dann auch am zweiten Tormodul 96 vor. Basierend auf der empfangenen Konfiguration der ersten TorWarnzone 52 kann das zweite Tormodul 96 eine oder mehrere Folgeoperationen durchführen. Beispielsweise kann das zweite Tormodul 96 über die zweite Torschnittstelle 112 einen zweiten Öffnungszustand des zweiten Tores 82 ermitteln. Wenn die zweite Tor-Verarbeitungseinheit 102 ermittelt, dass das zweite Tor 82 geschlossen ist, kann Beispielsweise ein zweites Öffnungssignal SO2 an der zweiten Torschnittstelle 112 bereitgestellt werden. Hierdurch wird das zweite Tor 82 geöffnet und Kollisionen des Fahrzeugs 2 mit dem zweiten Tor 82 können in vorteilhafter Weise vermieden werden. Es können auch weitere Folgeoperationen, wie beispielsweise das Senden eines Bremssignals SB an das Fahrzeug 2 oder das Ausgeben eines optischen und/oder akustischen Warnsignals erfolgen. Hierzu weisen das erste Tormodul 40, das zweite Tormodul 96 und/oder das Fahrzeugmodul 4 bevorzugt einen oder mehrere Signalgeber auf.

Das erste Tormodul 40, das zweite Tormodul 96 und das Fahrzeugmodul 4 bilden hier ein Schleusensicherheitssystem 114.

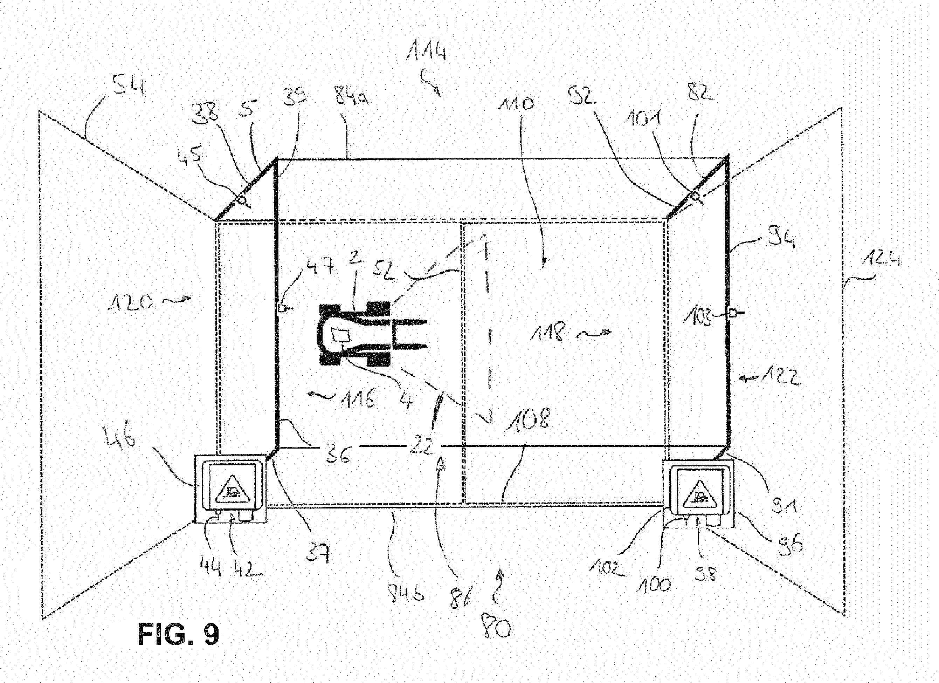

Das in Figur 9 dargestellte, nicht beanspruchte Ausführungsbeispiel stellt eine Variante des Schleusensicherheitssystems 114 der Figur 8 dar. Das dargestellte Schleusensicherheitssystem 114 unterscheidet sich von demjenigen der Figur 8 dadurch, dass die erste Tor-Antenneneinheit 42 zusätzlich zur ersten Tor-Antenne 44 eine zweite Tor-Antenne 45 und eine dritte Tor-Antenne 47 aufweist. Die erste Tor-Antenne 44 ist an dem ersten vertikalen Träger 37, die zweite Tor-Antenne 45 an dem zweiten vertikalen Träger 38 und die dritte Tor-Antenne 47 an dem Querbalken 39 des Torrahmens 36 des ersten Tores 5 angeordnet. Die zweite TorAntenneneinheit 98 weist, zusätzlich zur vierten Tor-Antenne 100, eine fünfte-Torantenne 101 und eine sechste Tor-Antenne 103 auf, wobei jeweils eine der Antennen an der dritten vertikalen Strebe 91, der vierten vertikalen strebe 92 und an dem zweiten Querbalken 94 des zweiten Torrahmens 90 angeordnet ist. Mittels der jeweils drei Tor-Antennen 44, 45, 47, 100, 101, 103 sind die erste Tor-Verarbeitungseinheit 46 und die zweite Tor-Verarbeitungseinheit 102 dazu angepasst, eine Gestalt der Tor-Warnzonen beliebig zu definieren. In diesem Ausführungsbeispiel ist die erste Tor-Warnzone 52 in einer Projektion rechteckig ausgebildet und erstreckt sich auf einer ersten Innenseite 116 des ersten Tores 5 über die Hälfte der Bodenfläche 110 des Innenraums 86 der Schleuse 80. Die dritte Tor-Warnzone 108 ist symmetrisch zur ersten Tor-Warnzone 52 ausgebildet und erstreckt sich auf einer zweiten Innenseite 118 des zweiten Tores 82 über die zweite Hälfte der Bodenfläche 110 des Innenraums 86. Die zweite Tor-Warnzone 54, die von der ersten Tor-Verarbeitungseinheit 46 definiert wird, ist an einer ersten Außenseite 120 des ersten Tores 5 in einer Projektion trapezförmig ausgebildet, wobei sich die zweite Tor-Warnzone 54 ausgehend vom ersten Tor 5 aufweitet. Die zweite Tor-Verarbeitungseinheit 102 definiert eine vierte Tor-Warnzone 124, die an einer zweiten Außenseite 122 des zweiten Tores 82 ebenfalls in einer Projektion trapezförmig ist. Hier ist die vierte Tor-Warnzone 124 symmetrisch zur zweiten Tor-Warnzone 54 definiert, es kann jedoch auch vorgesehen sein, dass die Gestalt der Tor-Warnzonen 52, 54, 108, 124 vollkommen individuell definiert wird. Darüber hinaus kann vorgesehen sein, dass sich die erste Tor-Warnzone 52 und die dritte Tor-Warnzone 108 teilweise oder vollständig überlappen. Hierdurch kann in vorteilhafter Weise eine Redundanz erreicht werden, wodurch die Sicherheit des Schleusensicherheitssystems 114 weiter erhöht wird.

Es kann vorgesehen sein, dass das erste Tormodul 40 nur eine erste Tor-Antenne 44 und eine zweite Tor-Antenne 45 aufweist, wobei die erste Tor-Warnzone 52 und die zweite TorWarnzone 54 dann bevorzugt symmetrisch ausgebildet sind. Es soll verstanden werden, dass eine trapezförmige Ausgestaltung der Tor-Warnzonen auch mit nur zwei Tor-Antennen möglich ist. Zudem kann eine individuelle Ausgestaltung der Tor-Warnzone auf gegenüberliegenden Innenseiten 116, 118 und Außenseiten 120, 122 eines Tores 5, 82 auch mit nur zwei Tor-Antennen je Tor-Antenneneinheit 42, 98 erreicht werden. Beispielsweise ist dies besonders einfach möglich, wenn die Seitenwände 84a, 84b der Schleuse 80 ein Ausbreiten elektromagnetischer Felder behindern.

Das erste Tormodul 40 und das zweite Tormodul 96 sind jeweils dazu angepasst, zu ermitteln, ob sich das Fahrzeugmodul 4 in einer ihrer Tor-Warnzonen 52, 54, 108, 124 befindet. Ferner sind das erste Tormodul 40 und das zweite Tormodul 96 dazu angepasst, in Antwort auf ein Ermitteln, dass sich das Fahrzeugmodul 4 in einer ihrer Tor-Warnzonen 52, 54, 108, 124 befindet, die Konfiguration der Tor-Warnzone an das jeweils andere Tormodul zu senden. Vorzugsweise ist das erste Tormodul 40 und/oder das zweite Tormodul 96 dazu angepasst, unter Verwendung der empfangenen Konfiguration der Tor-Warnzone des jeweils anderen Tormoduls oder unter Verwendung der Konfiguration der eigenen TorWarnzone zu ermitteln, ob sich das Fahrzeugmodul 4 im Innenraum 86 der Schleuse 80, im Bereich der ersten Außenseite 120 oder im Bereich der zweiten Außenseite 122 befindet. Dies ist besonders einfach möglich, wenn die erste Tor-Warnzone 52 und die zweite Tor-Warnzone 54 auf gegenüberliegenden Seiten des ersten Tores 5 angeordnet sind und wenn die dritte Tor-Warnzone 108 und die vierte Tor-Warnzone 124 auf gegenüberliegenden Seiten des zweiten Tores 82 angeordnet sind. Es soll jedoch verstanden werden, dass die Tor-Warnzonen 52,54, 108, 124 auch vollständig oder teilweise überlappend und/oder auf gleichen Seiten der Tore angeordnet sein können.

Vorzugsweise ist auch das Fahrzeugmodul 4 dazu vorgesehen, Signale an das erste Tormodul 40 und/oder das zweite Tormodul 96 zu senden. Beispielsweise kann das Fahrzeugmodul 4 ein Öffnungssignal SO und/oder ein Trajektorie-Signal ST bereitstellen, welches einen erwarteten Bewegungsweg des Fahrzeuges 2 umfasst. Besonders bevorzugt definiert das Fahrzeugmodul 4 eine Fahrzeug-Warnzone 22, die einen Teilbereich eines zweiten dreidimensionalen elektromagnetischen Feldes darstellt, dass von einer Fahrzeug-Antenneneinheit 7 des Fahrzeugmodul 4 generiert wird. Hier erstreckt sich die FahrzeugWarnzone 22 in Fahrtrichtung des Fahrzeugs 2 trapezförmig nach vorne. Aus Darstellungsgründen ist die Fahrzeug-Warnzone 22 hier verkleinert dargestellt. Bevorzugt ist das Fahrzeugmodul 4 dazu angepasst, die Konfiguration der Fahrzeug-Warnzone 22 an das erste Tormodul 40 und das zweite Tormodul 96 zu senden. Es kann vorgesehen sein, dass die Konfiguration der Fahrzeug-Warnzone 22 gesendet wird, sobald ein Tormodul 40, 96 innerhalb des zweiten dreidimensionalen elektromagnetischen Feldes angeordnet ist. Das zweite dreidimensionale elektromagnetische Feld ist in den Figuren aus Übersichtsgründen nicht dargestellt, es soll jedoch verstanden werden, dass sich dieses ausgehend vom Fahrzeugmodul vorzugsweise in alle Raumrichtungen erstreckt. Ebenso kann es bevorzugt sein, die Konfiguration der Fahrzeug-Warnzone 22 zu senden, wenn ermittelt wird, dass sich ein Tormodul 40, 96 in der Fahrzeug-Warnzone 22 befindet. Besonders bevorzugt ist das Fahrzeugmodul 4 dazu angepasst, zu erkennen, ob es sich im elektromagnetischen Feld eines Tormoduls 40,96 befindet und in Antwort auf ein solches ermitteln die Konfiguration der Fahrzeug-Warnzone 22 an das Tormodul 40, 96 zu senden.

Die Tormodule 40, 96 sind vorzugsweise dazu angepasst, unter Verwendung der Konfiguration der Fahrzeug-Warnzone 22, eine Fahrtrichtung des Fahrzeugs 2 relativ zum Tor zu ermitteln. Bevorzugt führen die Tormodule in Antwort auf das Ermitteln, ob sich ein Fahrzeugmodul 4 innerhalb der Schleuse 80 befindet, und/oder in Antwort auf das Ermitteln der Fahrrichtung des Fahrzeugs 2 eine oder mehrere Folgeoperationen aus. Es soll verstanden werden, dass das Fahrzeugmodul 4 auch mehrere Fahrzeug-Warnzonen definieren kann. Besonders bevorzugt definiert das Fahrzeugmodul 4 zwei Fahrzeug-Warnzonen, wovon sich jeweils eine in Fahrtrichtung des Fahrzeugs 2 nach vorne und nach hinten erstreckt. Besonders bevorzugt ist eine Breite der ersten Fahrzeug-Warnzone 22 größer oder gleich einer Breite des ersten Tores 5 und größer oder gleich einer Breite des zweiten Tores 82.

In diesem Ausführungsbeispiel (Figur 9) ermittelt die erste Tor-Verarbeitungseinheit 46, dass sich das Fahrzeugmodul 4 in der ersten Tor-Warnzone 52 befindet und sendet daraufhin die Konfiguration der ersten Tor-Warnzone 52 an das zweite Tormodul 96. Vorzugsweise ermittelt das erste Tormodul 52, unter Verwendung der ersten Fahrzeug-Warnzone 22, dass sich das Fahrzeugmodul 4 vom ersten Tor 5 entfernt. In Antwort auf das Ermitteln der Fahrtrichtung stellt das erste Tormodul 52 vorzugsweise ein Schließsignal STS an der ersten Torschnittstelle 56 bereit, sodass das erste Tor 5 geschlossen wird. Anschließend ermittelt die erste Tor-Verarbeitungseinheit 46, unter Verwendung des ersten Zustandssignals SZ1 das an der ersten Torschnittstelle 56 anliegt, dass das erste Tor 5 in einem geschlossenen Zustand ist. Das erste Tormodul 40 sendet daraufhin den Öffnungszustand des ersten Tores 5 an das zweite Tormodul 96. Das zweite Tormodul 96 empfängt die Konfiguration der ersten Tor-Warnzone 52 und die Konfiguration der Fahrzeug-Warnzone 22 und ermittelt, dass sich das Fahrzeug 2 auf das zweite Tor 82 zu bewegt. In Antwort auf dieses Ermitteln, stellt die zweite Tor-Verarbeitungseinheit 102 an der zweiten Torschnittstelle 112 ein zweites Öffnungssignal SO2 bereit, so dass das zweite Tor 82 geöffnet wird. Vorzugsweise stellt die zweite Tor-Verarbeitungseinheit 102 das zweite Öffnungssignal SO2 nur bereit, wenn das erste Tor 5 geschlossen ist. Somit kann sichergestellt werden, dass immer nur eines der Tore 5, 82 geöffnet ist. Ferner werden Kollisionen des Fahrzeugs 2 mit der Schleuse 80 vermieden.

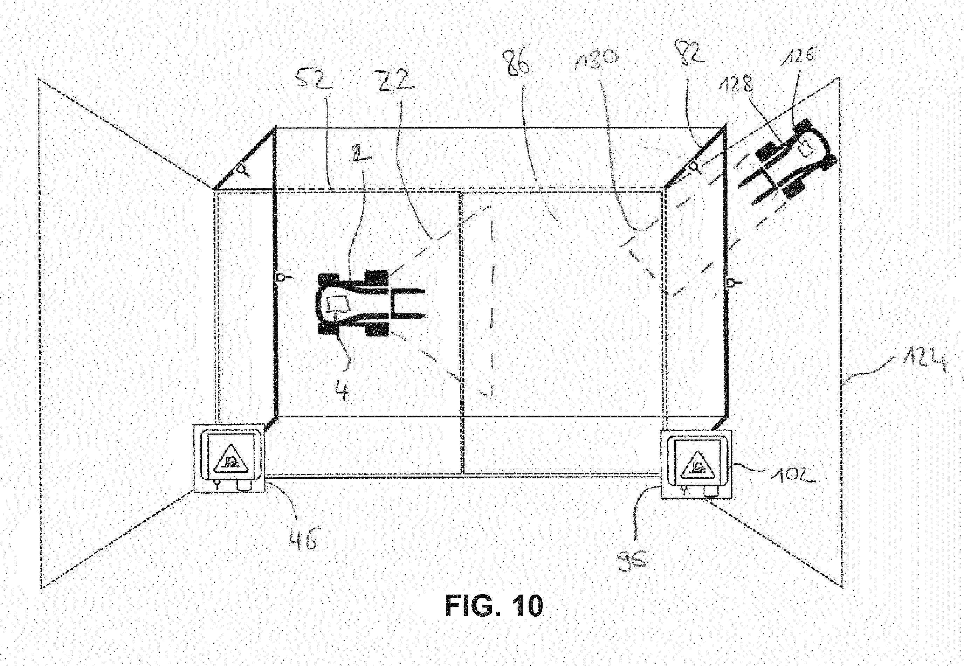

Figur 10 zeigt ein fünftes, nicht beanspruchtes Ausführungsbeispiel eines Schleusensicherheitssystems 114 welches analog zu dem in Figur 9 dargestellten Schleusensicherheitssystem 114 ausgebildet ist und ferner ein zweites Fahrzeugmodul 126 aufweist. Das zweite Fahrzeugmodul 126 ist an einem zweiten Fahrzeug 128 angebracht und definiert eine fünfte FahrzeugWarnzone 130, die einen Teilbereich eines vierten dreidimensionalen elektromagnetischen Feldes darstellt (in Figur 10 nicht dargestellt). Es soll verstanden werden, dass das zweite Fahrzeugmodul 126 analog zum ersten Fahrzeugmodul 4 ausgebildet sein kann. Die fünfte Fahrzeug-Warnzone 130 erstreckt sich vom Fahrzeug 128 in einer Projektion rechteckig nach vorne. Die zweite Tor-Verarbeitungseinheit 96 ermittelt, dass sich das zweite Fahrzeugmodul 126 in der vierten Tor-Warnzone 124 befindet und sendet die Konfiguration der vierten Tor-Warnzone 124 an das erste Tormodul 40. In analoger Weise ermittelt die erste Tor-Verarbeitungseinheit 46, dass sich das erste Fahrzeugmodul 4 innerhalb der ersten Tor-Warnzone 52 befindet und sendet die Konfiguration der ersten Warnzone 52 an das zweite Tormodul 96. Die zweite Tor-Verarbeitungseinheit 102 ermittelt, unter Verwendung der Konfiguration der ersten Tor-Warnzone 52, dass sich das erste Fahrzeugmodul 4 innerhalb der Schleuse 80 befindet. In diesem Ausführungsbeispiel ist das zweite Tormodul 96 dazu angepasst, ein Bremssignal SB an das erste Fahrzeugmodul 4 und das zweite Fahrzeugmodul 126 zu senden. Hier sendet das zweite Tormodul 96 das Bremssignal nur an das zweite Fahrzeugmodul 126, sodass das zweite Fahrzeug 128 bis zum Stillstand abgebremst wird. Das erste Fahrzeugmodul 4 und das zweite Fahrzeugmodul 126 senden eine Konfiguration ihrer Fahrzeug-Warnzonen 22, 130 an das erste Tormodul 40 und das zweite Tormodul 96, so dass diese Fahrtrichtungen der Fahrzeuge 2, 128 relativ zum ersten Tor 5 bzw. zweiten Tor 82 ermitteln. Vorzugsweise sendet das zweite Tormodul 96 das Bremssignal nur an das zweite Fahrzeugmodul 126, wenn ermittelt wird, dass sich sowohl das erste Fahrzeug 2 als auch das zweite Fahrzeug 128 auf das zweite Tor 82 zu bewegen. Vorzugsweise wird das Bremssignal nur an das Fahrzeugmodul gesendet, dass außerhalb der Schleuse 80 angeordnet ist.

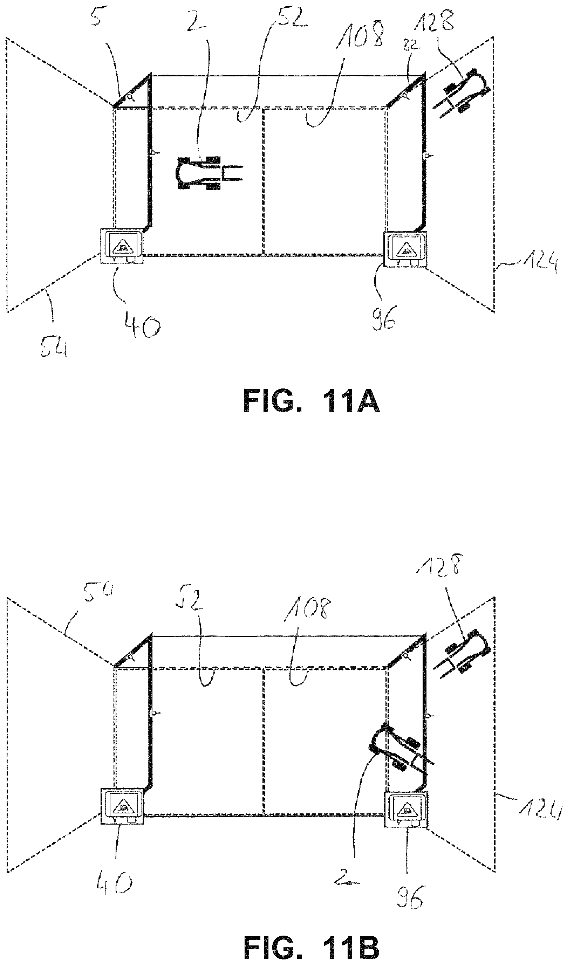

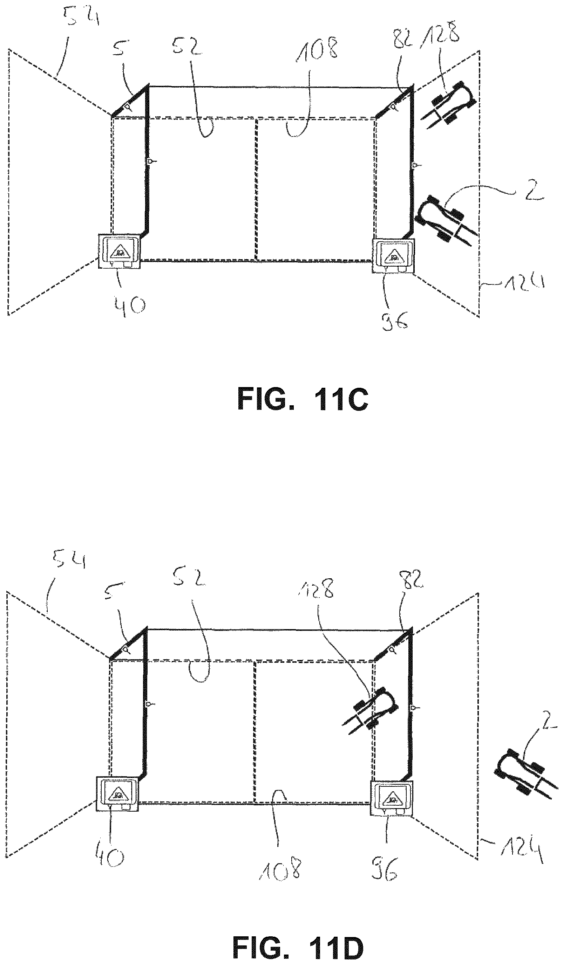

In diesem Ausführungsbeispiel kann das zweite Fahrzeug 2 die Schleuse 80 durchfahren und durch das zweite Tor 82 verlassen. Im Anschluss kann das zweite Fahrzeug 128 in den Innenraum 86 der Schleuse einfahren. Die Figuren 11A bis 11D illustrieren diesen Vorgang, wobei die Fahrzeug-Warnzonen 22, 130 nicht dargestellt sind. In dem in Figur 11 A gezeigten Zustand ist das erste Fahrzeug 2 in der ersten Tor-Warnzone 52 angeordnet und das zweite Fahrzeug 128 in der vierten Tor-Warnzone 124 angeordnet. Da das zweite Tormodul 96 ein Bremssignal SB an das zweite Fahrzeugmodul 126 (in Figur 11 nicht dargestellt) sendet, ist das zweite Fahrzeug 128 bis zum Stillstand gebremst. Das erste Tormodul 40 ermittelt, unter Verwendung der Konfiguration der ersten FahrzeugWarnzone 22, dass sich das erste Fahrzeug 2 vom ersten Tor 5 entfernt und stellt an der ersten Torschnittstelle 56 ein Schließsignal STS bereit, sodass das erste Tor 5 geschlossen wird. Das zweite Tormodul 96 ermittelt, unter Verwendung der Konfiguration der ersten Fahrzeug-Warnzone 22, dass sich das erste Fahrzeug 2 auf das zweite Tor 82 zu bewegt und, dass das erste Tor 5 geschlossen ist. Daraufhin stellt das zweite Tormodul 96 an der zweiten Torschnittstelle 112 ein zweites Öffnungssignal SO2 bereit, so dass das zweite Tor 82 geöffnet wird. In diesem Ausführungsbeispiel ist das zweite Tormodul 96 dazu angepasst, zu erkennen, ob ein auf das Tormodul abgestimmtes Fahrzeugmodul 4, 126 vollständig von der dritten Tor-Warnzone 108 in die vierte Tor-Warnzone 124 übergegangen ist. In Figur 11 B ist das erste Fahrzeug 2 sowohl in der dritten Tor-Warnzone 108 als auch in der vierten Tor-Warnzone 124 angeordnet. Um Kollisionen zwischen einem ersten bzw. zweiten Fahrzeug 2, 128 und einem ersten oder zweiten Tor 5, 82 zu vermeiden, kann vorgesehen sein, dass das erste und/oder zweite Tormodul 40, 96 ein Schließsignal STS nur bereitstellen, wenn ermittelt wird, dass ein Fahrzeug 2, 128 vollständig von einer ersten Tor-Warnzone 52 in eine zweite Tor-Warnzone 54 bzw. von einer dritten Tor-Warnzone 108 in eine vierte Tor-Warnzone 124 übergegangen ist. Hier stellt das zweite Tormodul 96 das Schließsignal STS erst dann bereit, wenn das erste Fahrzeug 2 das zweite Tor 82 vollständig durchfahren hat (Figur 11 C), bzw. vollständig von der dritten Tor-Warnzone 108 in die vierte Tor-Warnzone 124 übergegangen ist. Bevorzugt ist eine Trennung zwischen benachbarten Tor-Warnzonen in einem Schließbereich des Tores angeordnet.

Es kann jedoch auch vorgesehen sein, dass das zweite Tormodul 96 das Schließsignal STS nicht bereitstellt, da es unter Verwendung der fünften Fahrzeugwarnzone (in Figur 11 nicht dargestellt) ermittelt, dass eine Fahrtrichtung des zweiten Fahrzeugs 128 auf das zweite Tor 82 ausgerichtet ist. Wenn das erste Fahrzeug 2 die vierte Tor-Warnzone 124 verlassen hat, beendet das zweite Tormodul 96 das Senden des Bremssignals SB an das zweite Fahrzeugmodul 126, so dass das zweite Fahrzeug 128 durch das zweite Tor 82 in den Innenraum 86 der Schleuse 80 einfahren kann (Figur 11D). Es kann jedoch auch vorgesehen sein, dass das zweite Tormodul 96 das Bremssignal SB nur einmalig sendet und das zweite Fahrzeug 128 gebremst ist, bis das Tormodul 96 ein Beschleunigungssignal SA an das zweite Fahrzeugmodul 126 sendet.

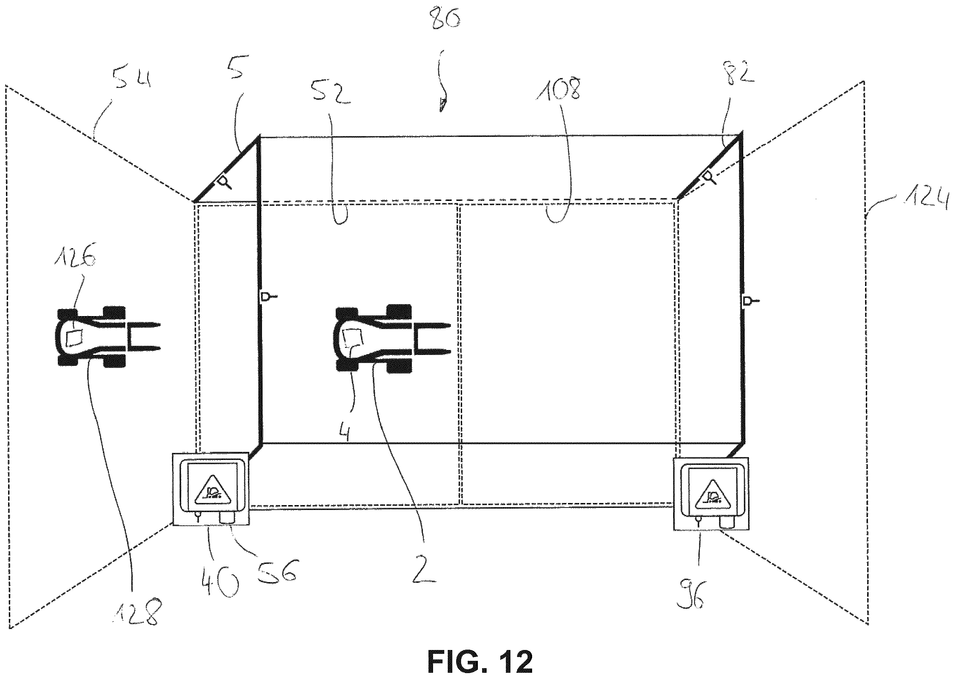

Figur 12 zeigt eine Variante des fünften Ausführungsbeispiels des Schleusensicherheitssystems 118, wobei das erste Fahrzeug 2 in der ersten Tor-Warnzone 52 angeordnet ist. Das zweite Fahrzeug 128 ist in der zweiten Tor-Warnzone 54 angeordnet und fährt auf das erste Tor 5 zu, welches ebenso wie das zweite Tor 82 geschlossen ist. Das erste Fahrzeugmodul 4 und das zweite Fahrzeugmodul 126 senden Konfigurationen der ersten Fahrzeug-Warnzone 22 und der fünften Fahrzeug-Warnzone 130 an das erste Tormodul 40. Das erste Tormodul 40 ermittelt, unter Verwendung der ersten Fahrzeug-Warnzone 22, dass sich das erste Fahrzeug 2 vom ersten Tor 5 entfernt. Ferner ermittelt das erste Tormodul 40, unter Verwendung der fünften Fahrzeug-Warnzone 130, dass sich das zweite Fahrzeug 128 auf das erste Tor 5 zubewegt. In dieser Variante stellt das erste Tormodul 40 ein erstes Öffnungssignal SO an der ersten Torschnittstelle 56 bereit, da sich das erste Fahrzeug 2 und das zweite Fahrzeug 128 relativ zum ersten Tor 5 in unterschiedlichen Richtungen bewegen und somit das Risiko einer Kollision zwischen dem ersten Fahrzeug 2 und dem zweiten Fahrzeug 128 gering ist. Es kann jedoch auch bevorzugt sein, dass das erste Tor 5 geschlossen bleibt, bis das erste Fahrzeug 2 die Schleuse 80 durch das zweite Tor 82 verlassen hat.

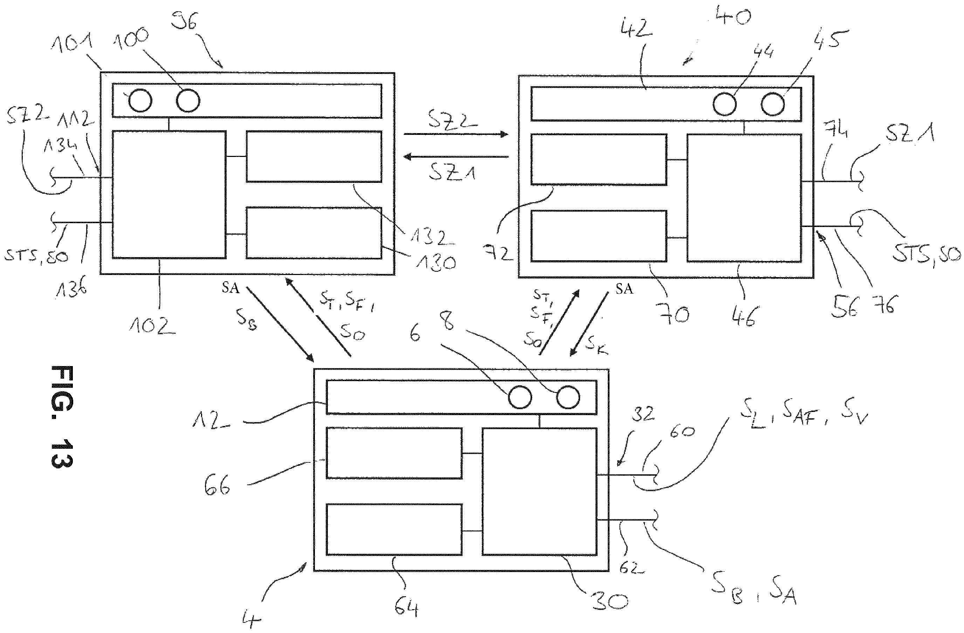

Figur 13 zeigt schematisch ein Fahrzeugmodul 4, ein erstes Tormodul 40 und ein zweites Tormodul 96. Das Fahrzeugmodul 4 weist, wie bereits vorher beschrieben, eine Antenneneinheit 12 mit hier dargestellt einer ersten Fahrzeug-Antenne 6 und einer zweiten Fahrzeug-Antenne 8 auf. Die Verarbeitungseinheit 30 ist mit der Antenneneinheit 12 verbunden und weist ferner eine Fahrzeugschnittstelle 32 auf. In diesem Ausführungsbeispiel ist die Fahrzeugschnittstelle 32 mit einer ersten Leitung 60 und einer zweiten Leitung 62 gezeigt, wobei die erste Leitung 60 zum Empfangen von Signalen, wie beispielsweise einem Lenkwinkelsignal SL, einem Beschleunigungssignal des Fahrzeugs SA sowie einem Geschwindigkeitssignal des Fahrzeugs SV ausgebildet ist. Die zweite Leitung 62 ist zum Ausgeben von Signalen von dem Fahrzeugmodul 4 an das Fahrzeug 2 vorgesehen, wie beispielsweise das Bremssignal SB, das Beschleunigungssignal SA. Neben diesen Einheiten weist das Fahrzeugmodul 4 ferner einen Speicher 64 auf, in dem beispielsweise Konfigurationen für die erste und zweite Fahrzeug-Warnzone 22, 24, 26, 28 gespeichert sein können. Schließlich weist das Fahrzeugmodul 4 eine Ausgabeeinheit 66 auf, die beispielsweise optische und/oder akustische Signale zum Warnen eines Fahrers des Fahrzeugs 2 ausgeben kann.

Das Tormodul 40 weist die Tor-Antenneneinheit 42, die erste Tor-Verarbeitungseinheit 46, eine Torspeichereinheit 70 und eine Torausgabeeinheit 72 auf. Die Torschnittstelle 56 weist wiederum eine erste Leitung 74 und eine zweite Leitung 76 auf, wobei die erste Leitung 74 zum Empfangen von Signalen von einer Torsteuerung ausgebildet ist, wie insbesondere einem ersten Zustandssignal SZ1 des ersten Tores 5. Die zweite Leitung 76 ist zum Ausgeben von Signalen an die Torsteuerung des ersten Tores 5 vorgesehen, wie beispielsweise ein Öffnungssignal SO und/oder einem Schließsignal STS.

In analoger Weise weist das zweite Tormodul 96 die zweite Tor-Antenneneinheit 98, eine zweite Tor-Verarbeitungseinheit 102, eine zweite Torspeichereinheit 130 und eine zweite Torausgabeeinheit 132 auf. Die zweite Tor-Antenneneinheit 98 weist hier eine vierte TorAntenne 100 und eine fünfte Tor-Antenne 101 auf. Die zweite Torschnittstelle 112 weist wiederum eine erste Leitung 134 und eine zweite Leitung 136 auf, wobei die erste Leitung 134 zum Empfangen von Signalen von einer Torsteuerung angepasst ist, wie insbesondere einem zweiten Zustandssignal SZ2 des zweiten Tores 82. Die zweite Leitung 136 ist zum Ausgeben von Signalen an die Torsteuerung des zweiten Tores 82 vorgesehen, wie beispielsweise einem zweiten Öffnungssignal SO2 und/oder einem Schließsignal STS.

Die Module des Schleusensicherheitssystems, hier das Fahrzeugmodul 4, das erste Tormodul 40 und das zweite Tormodul 96, kommunizieren mittels Funk miteinander. So kann beispielsweise das Fahrzeugmodul 4 mittels der Antenneneinheit 12, oder einer weiteren Sende-/Empfangseinheit, die Signale ST, SO, SF an das erste Tormodul 40 und/oder zweite Tormodul 96 senden, und das erste Tormodul 40 und/oder das zweite Tormodul 96 kann in gleicher Weise die Signale SB, SA an das Fahrzeugmodul 4 senden. Weiterhin kommunizieren auch das erste Tormodul 40 und das zweite Tormodul 96 miteinander. Beispielsweise kann das erste Tormodul 40 den Öffnungszustand und/oder das erste Zustandssignal SZ1 des ersten Tores 5 an das zweite Tormodul 96 senden.

## Patentansprüche

1. Torsicherheitssystem (1) zum Verhindern von Kollisionen zwischen einem Fahrzeug (2) und einem Tor (5), mit:
a) einem Tormodul (40), aufweisend
a1) eine Tor-Antenneneinheit (42), mit zumindest einer ersten Tor-Antenne (44), welche dazu ausgebildet ist, in einer vorbestimmten räumlichen Beziehung zu einem Torrahmen (36) des Tores (5) montiert zu werden, und ein erstes dreidimensionales elektromagnetisches Feld (50) zu erzeugen,
a2) eine mit der Tor-Antenneneinheit (42) verbundene Tor-Verarbeitungseinheit (46) welche dazu angepasst ist, wenigstens eine erste Tor-Warnzone für das Tor (5) zu definieren, die einen Teilbereich des ersten elektromagnetischen Feldes darstellt, wobei die Tor-Verarbeitungseinheit (46) dazu angepasst ist mittels der Tor-Antenneneinheit (44) zu ermitteln, ob sich ein auf die Tor-Antenneneinheit (44) abgestimmtes Fahrzeugmodul (4) innerhalb der ersten Tor-Warnzone befindet, und
a3) eine Torschnittstelle zur Verbindung des Tormoduls (40) mit einer Steuerung des Tores; und mit
b) dem Fahrzeugmodul (4), aufweisend
b1) eine Fahrzeug-Antenneneinheit (12), mit zumindest einer ersten Fahrzeug-Antenne (6), welche dazu ausgebildet ist, in einer vorbestimmten räumlichen Beziehung an dem Fahrzeug (2) montiert zu werden, und ein zweites dreidimensionales elektromagnetisches Feld (16, 18, 20) zu erzeugen,
b2) eine mit der Fahrzeug-Antenneneinheit verbundene Fahrzeug-Verarbeitungseinheit (30) welche dazu angepasst ist, wenigstens eine erste Fahrzeug-Warnzone (22) für das Fahrzeug (2) zu definieren, die einen Teilbereich des zweiten elektromagnetischen Feldes (16, 18, 20) darstellt, wobei die Fahrzeug-Verarbeitungseinheit (30) dazu angepasst ist mittels der Fahrzeug-Antenneneinheit (12) zu ermitteln, ob sich das auf die Fahrzeug-Antenneneinheit (12) abgestimmte Tormodul (40) innerhalb der ersten Fahrzeug-Warnzone (22) befindet,
wobei die Tor-Verarbeitungseinheit (46) dazu eingerichtet ist, eine Konfiguration der ersten Tor-Warnzone an das Fahrzeugmodul (4) zu senden.

2. Torsicherheitssystem nach Anspruch 1, wobei
der ersten Tor-Warnzone (52) ein erster Tor-Aktivitätssatz mit mindestens einer ersten Tor-Folgeoperation und ein zweiter Tor-Aktivitätssatz mit mindestens einer zweiten Tor-Folgeoperation zugeordnet sind, und wobei
der ersten Fahrzeug-Warnzone (22) ein erster Fahrzeug-Aktivitätssatz mit mindestens einer ersten Fahrzeug-Folgeoperation und ein zweiter Fahrzeug-Aktivitätssatz mit mindestens einer zweiten Fahrzeug-Folgeoperation zugeordnet sind.

3. Torsicherheitssystem nach Anspruch 1 oder 2, wobei die Tor-Verarbeitungseinheit (46) dazu angepasst ist, über die Torschnittstelle ein Zustandssignal zu empfangen und mittels des empfangenen Zustandssignals zu ermitteln, ob sich das Tor (5) in einem geöffneten oder geschlossenen Zustand befindet.

4. Torsicherheitssystem nach Anspruch 2 und 3, wobei die Tor-Verarbeitungseinheit (46) dazu ausgebildet ist in Abhängigkeit des ermittelten Zustands den ersten oder zweiten Tor-Aktivitätssatz auszuwählen.

5. Torsicherheitssystem nach einem der vorstehenden Ansprüche 3 oder 4, wobei die Tor-Verarbeitungseinheit (46) dazu eingerichtet ist, ein Bremssignal an das Fahrzeugmodul (4) zu enden, zum Bremsen des Fahrzeugs (2), an der Torschnittstelle ein Öffnungssignal zum Öffnen des Tores (5) bereitzustellen und/oder eine Konfiguration der ersten Tor-Warnzone an das Fahrzeugmodul (4) zu senden.

6. Torsicherheitssystem nach einem der vorstehenden Ansprüche, wobei die Tor-Verarbeitungseinheit (46) dazu angepasst ist, eine zweite Tor-Warnzone für das Tor zu definieren, die einen Teilbereich des ersten elektromagnetischen Feldes darstellt, wobei die Tor-Verarbeitungseinheit (46) dazu angepasst ist mittels der Tor-Antenneneinheit (42) zu bestimmen, ob sich das Fahrzeugmodul (4) innerhalb der zweiten Tor-Warnzone befindet, wobei die zweite Tor-Warnzone vorzugsweise, neben der ersten Tor-Warnzone, auf einer gegenüberliegenden Seite des Tores (5), oder teilweise oder vollständig überlappend mit der ersten Tor-Warnzone angeordnet ist.

7. Torsicherheitssystem nach einem der vorstehenden Ansprüche, wobei die Tor-Verarbeitungseinheit (46) dazu eingerichtet ist, ein zweites Fahrzeugmodul in der ersten TorWarnzone zu ermitteln und in Antwort hierauf an beide Fahrzeugmodule ein Bremssignal zu senden, zum Bremsen der Fahrzeuge.

8. Torsicherheitssystem nach einem der vorstehenden Ansprüche, wobei die Fahrzeug-Verarbeitungseinheit (30) dazu eingerichtet ist, die erste Fahrzeug-Warnzone (22) so zu erzeugen, dass sie sich wenigstens bei Vorwärtsfahrt von einer Fahrzeugfront nach vorne erstreckt, wobei die Fahrzeug-Verarbeitungseinheit (32) vorzugsweise dazu eingerichtet ist, die erste Fahrzeug-Warnzone (22) in Abhängigkeit wenigstens einer Geschwindigkeit des Fahrzeugs (2) zu modifizieren, und wobei die erste Fahrzeug-Warnzone (22) in einer vertikalen Projektion vorzugsweise trapezförmig ist und sich in Fahrzeugbreitenrichtung nach vorne hin erweitert.

9. Torsicherheitssystem nach einem der vorstehenden Ansprüche, wobei die Fahrzeug-Verarbeitungseinheit (32) dazu eingerichtet ist, ein Öffnungssignal an die Tor-Verarbeitungseinheit (46) zu senden zum Öffnen des Tores (5), wenn die Fahrzeug-Verarbeitungseinheit (32) ein Tormodul (40) in der ersten Fahrzeug-Warnzone (22) ermittelt.

10. Torsicherheitssystem nach einem der vorstehenden Ansprüche, wobei die Fahrzeug-Verarbeitungseinheit (30) dazu eingerichtet ist, eine Konfiguration der ersten Fahrzeug-Warnzone (22) an das Tormodul (40) zu senden, wobei das Tormodul (40) ferner dazu eingerichtet ist, basierend auf der empfangenen Konfiguration der ersten FahrzeugWarnzone (22), eine Fahrtrichtung des Fahrzeugs (2) relativ zu dem Tor (5) zu ermitteln, wobei das Tormodul (40) vorzugsweise dazu eingerichtet ist, ein Öffnungssignal zum Öffnen des Tores (5) bereitzustellen, wenn ermittelt wird, dass sich das Fahrzeugmodul (4) auf das Tor (5) zu bewegt.

11. Verfahren zum Verhindern von Kollisionen zwischen einem Fahrzeug (2) und einem Tor (5) unter Verwendung eines Torsicherheitssystems gemäß einem der vorstehenden Ansprüche, wobei das Fahrzeugmodul (4) auf einem Fahrzeug (2), insbesondere Stapler, montiert ist und das Tormodul (40) benachbart zu einem Tor (5), insbesondere Rolltor einer Halle, montiert ist, mit den Schritten:
- Erzeugen eines ersten dreidimensionalen elektromagnetischen Feldes, unter Verwendung der Tor-Antenneneinheit (42);
- Definieren einer ersten Tor-Warnzone für das Tor (5), die einen Teilbereich des ersten elektromagnetischen Feldes darstellt;
- Erzeugen eines zweiten dreidimensionalen elektromagnetischen Feldes, unter Verwendung der Fahrzeug-Antenneneinheit (12);
- Definieren einer ersten Fahrzeug-Warnzone (22) für das Fahrzeug (2), die einen Teilbereich des zweiten elektromagnetischen Feldes darstellt;
- Ermitteln, ob sich das Fahrzeugmodul (4) innerhalb der ersten Tor-Warnzone befindet, unter Verwendung der Tor-Verarbeitungseinheit (46);
- Ermitteln, ob sich das Tormodul (40) innerhalb der ersten Fahrzeug-Warnzone (22) befindet, unter Verwendung der Fahrzeug-Verarbeitungseinheit (30); und
- Senden einer Konfiguration der ersten Tor-Warnzone an das Fahrzeugmodul (4) unter Verwendung der Tor-Verarbeitungseinheit (46);
und vorzugsweise umfassend die Schritte:
- Ermitteln, ob sich ein weiteres auf die Tor-Antenneneinheit (46) abgestimmtes Fahrzeugmodul, welches an einem weiteren Fahrzeug montiert ist, innerhalb der ersten Tor-Warnzone befindet, unter Verwendung der Tor-Verarbeitungseinheit (46); und
- Senden von Bremssignalen von der Tor-Verarbeitungseinheit (46) an das Fahrzeugmodul (30) und das weitere Fahrzeugmodul;
- Bereitstellen eines abgeleiteten Bremssignals für das Fahrzeug (2) an einer Fahrzeugschnittstelle (32) des Fahrzeugmoduls (30) zum Bremsen des Fahrzeugs (2), und Bereitstellen eines abgeleiteten Bremssignals für das weitere Fahrzeug an einer Fahrzeugschnittstelle des weiteren Fahrzeugmoduls zum Bremsen des weiteren Fahrzeugs.

12. Verfahren nach Anspruch 11, umfassend den Schritt:
- Ermitteln, ob sich das Fahrzeugmodul (4) auf das Tor (5) zu bewegt
und vorzugsweise umfassend die Schritte:
- Senden einer Konfiguration der ersten Fahrzeug-Warnzone (22) an die Tor-Verarbeitungseinheit (46); und
- Ermitteln, unter Verwendung einer Konfiguration der ersten Tor-Warnzone, eine Fahrtrichtung des Fahrzeugs (2) relativ zu dem Tor (5).

13. Verfahren nach Anspruch 11 oder 12, umfassend die Schritte:
- Senden eines Öffnungssignals von dem Fahrzeugmodul (4) an das Tormodul (40) für dann Fall, dass ermittelt wird, dass sich das Fahrzeug (2) auf das Tor (5) zu bewegt; und
- Empfangen des Öffnungssignals an dem Tormodul (40) und Bereitstellen eines abgeleiteten Öffnungssignals an einer Torschnittstelle des Tormoduls (40).

14. Verfahren nach einem der Ansprüche 11 bis 13, umfassend die Schritte:
- Senden eines Bremssignals von dem Tormodul (40) an das Fahrzeugmodul (4) für dann Fall, dass ermittelt wird, dass sich das Fahrzeug (2) auf das Tor (5) zu bewegt; und
- Empfangen des Bremssignals an dem Fahrzeugmodul (4) und Bereitstellen eines abgeleiteten Bremssignals an einer Fahrzeugschnittstelle (32) des Fahrzeugmoduls (4),
wobei das Bremssignal vorzugsweise so lange gesendet wird, bis das Tor (5) geöffnet ist.

15. Computerprogramm, umfassend Befehle, die bewirken, dass das Torsicherheitssystem des Anspruchs 1 die Verfahrensschritte nach Anspruch 11 ausführt.

## Claims

1. A gate safety system (1) for preventing collisions between a vehicle (2) and a gate (5), having
a) a gate module (40), comprising
a1) a gate antenna unit (42) having at least one first gate antenna (44) implemented for mounting in a specified spatial relationship to a gate frame (36) of the gate (5), and for generating a first three-dimensional electromagnetic field (50),
a2) a gate processing unit (46) connected to the gate antenna unit (42) and adapted for defining at least one first gate warning zone for the gate (5), the first gate warning zone representing a sub-region of the first electromagnetic field, the gate processing unit (46) being adapted for determining by means of the gate antenna unit (44) whether a vehicle module (4) matched to the gate antenna unit (44) is present within the first gate warning zone,and
a3) a gate interface for connecting the gate module (40) to a controller of the gate; and having
b) the vehicle module (4), comprising
b1) a vehicle antenna unit (12) having at least one first vehicle antenna (6) implemented for mounting in a specified spatial relationship on the vehicle (2), and for generating a second three-dimensional electromagnetic field (16, 18, 20),
b2) a vehicle processing unit (30) connected to the vehicle antenna unit and adapted for defining at least one first vehicle warning zone (22) for the vehicle (2), representing a sub-region of the second electromagnetic field (16, 18, 20), the vehicle processing unit (30) being adapted for determining by means of the vehicle antenna unit (12) whether the gate module (40) matched to the vehicle antenna unit (12) is present within the first vehicle warning zone (22),
wherein the gate processing unit (46) is configured to transmit a configuration of the first gate warning zone to the vehicle module (4).

2. The gate safety system according to claim 1, wherein
a first gate activity set having at least one first gate follow-on operation and a second gate activity set having at least one second gate follow-on operation are associated with the first gate warning zone (52), and wherein
a first vehicle activity set having at least one first vehicle follow-on operation and a second vehicle activity set having at least one second vehicle follow-on operation are associated with the first vehicle warning zone (22).

3. The gate safety system according to claim 1 or 2, wherein the gate processing unit (46) is adapted for receiving a state signal via the gate interface and for determining by means of the received state signal whether the gate (5) is in an open or closed state.

4. The gate safety system according to claim 2 or 3, wherein the gate processing unit (46) is implemented for selecting the first or second gate activity set as a function of the determined state.

5. The gate safety system according to any one of the preceding claims 3 or 4, wherein the gate processing unit (46) is configured to transmit a brake signal to the vehicle module (4) for braking the vehicle (2), to provide an opening signal for opening the gate (5) at the gate interface, and/orto transmit a configuration of the first gate warning zone to the vehicle module (4).

6. The gate safety system according to any one of the preceding claims, the gate processing unit (46) being adapted for defining at least one second gate warning zone for the gate, the second gate warning zone representing a sub-region of the first electromagnetic field, the gate processing unit (46) being adapted for determining by means of the gate antenna unit (42) whether the vehicle module (4) is present within the second gate warning zone, wherein the second gate warning zone is preferably disposed adjacent to the first gate warning zone, on an opposite side of the gate (5), or partially or completely overlapping the first gate warning zone.

7. The gate safety system according to any one of the preceding claims, wherein the gate processing unit (46) is configured to detect a second vehicle module in the first gate warning zone and to transmit a brake signal to both vehicle modules for braking the vehicles in response thereto.

8. The gate safety system according to any one of the preceding claims, wherein the vehicle processing unit (30) is configured to generate the first vehicle warning zone (22) so that said first vehicle warning zone extends forward from a vehicle front at least when driving forward, wherein the vehicle processing unit (32) is preferably configured to modify the first vehicle warning zone (22) as a function of at least one speed of the vehicle (2), and wherein the first vehicle warning zone (22) is trapezoidal in a vertical projection and widens forward in a vehicle width direction.

9. The gate safety system according to any one of the preceding claims, wherein the vehicle processing unit (32) is configured to transmit an opening signal to the gate processing unit (46) for opening the gate (5) when the vehicle processing unit (32) detects a gate module (40) in the first vehicle warning zone (22).

10. The gate safety system according to any one of the preceding claims, wherein the vehicle processing unit (30) is configured to transmit a configuration of the first vehicle warning zone (22) to the gate module (40), wherein the gate module (40) is further configured to determine a direction of travel of the vehicle (2) relative to the gate (5) based on the received configuration of the first vehicle warning zone (22), wherein the gate module (40) is preferably configured to provide an opening signal for opening the gate (5) when it is determined that the vehicle module (4) is moving towards the gate (5).

11. A method for preventing collisions between a vehicle (2) and a gate (5) using a gate safety system according to any one of the preceding claims, the vehicle module (4) being mounted on a vehicle (2), in particular a stacker, and the gate module (40) being mounted adjacent to a gate (5), in particular a roll-up door of a building, having the steps:
- generating a first three-dimensional electromagnetic field using the gate antenna unit (42);
- defining a first gate warning zone for the gate (5), the first gate warning zone representing a sub-region of the first electromagnetic field;
- generating a second three-dimensional electromagnetic field using the vehicle antenna unit (12);
- defining a first vehicle warning zone (22) for the vehicle (2), the first vehicle warning zone representing a sub-region of the second electromagnetic field;
- determining whether the vehicle module (4) is present within the first gate warning zone using the gate processing unit (46);
- determining whether the gate module (40) is present within the first vehicle warning zone (22) using the vehicle processing unit (30); and
- transmitting a configuration of the first gate warning zone to the vehicle module (4) using the gate processing unit (46);
and preferably comprising the steps:
- determining whether a further vehicle module matched to the gate antenna unit (46) and mounted on a further vehicle is present within the first gate warning zone using the gate processing unit (46); and
- transmitting brake signals from the gate processing unit (46) to the vehicle module (30) and the further vehicle module;
- providing a derived brake signal for the vehicle (2) at a vehicle interface (32) of the vehicle module (30) for braking the vehicle (2), and providing a derived brake signal for the further vehicle at a vehicle interface of the further vehicle module for braking the further vehicle.

12. The method according to claim 11, comprising the step:
- determining whether the vehicle module (4) is moving towards the gate (5),
and preferably comprising the steps:
- transmitting a configuration of the first vehicle warning zone (22) to the gate processing unit (46); and
- determining a travel direction of the vehicle (2) relative to the gate (5) using a configuration of the first gate warning zone.

13. The method according to claim 11 or 12, comprising the steps:
- transmitting an opening signal from the vehicle module (4) to the gate module (40) for the case that it is determined that the vehicle (2) is moving towards the gate (5); and
- receiving the opening signal at the gate module (40) and providing a derived opening signal at a gate interface of the gate module (40).

14. The method according to any one of the claims 11 through 13, comprising the steps:
- transmitting a brake signal from the gate module (40) to the vehicle module (4) for the case that it is determined that the vehicle (2) is moving towards the gate (5); and
- receiving the brake signal at the vehicle module (4) and providing a derived brake signal at a vehicle interface (32) of the vehicle module (4),
wherein the brake signal is preferably transmitted until the gate (5) is opened.

15. A computer program comprising commands for inducing the gate safety system of claim 1 to perform the method steps according to claim 11.

## Revendications

1. Système de sécurité de portail (1) destiné à empêcher les collisions entre un véhicule (2) et un portail (5), comprenant:
a) un module de portail (40), possédant
a1) une unité d'antenne de portail (42), comprenant au moins une première antenne de portail (44) qui est configurée pour être montée dans une relation spatiale prédéterminée avec un cadre de portail (36) du portail (5) et pour générer un premier champ électromagnétique tridimensionnel (50),
a2) une unité de traitement de portail (46) reliée à l'unité d'antenne de portail (42), qui est adaptée pour définir au moins une première zone d'avertissement de portail pour le portail (5), qui représente une zone partielle du premier champ électromagnétique, l'unité de traitement de portail (46) étant adaptée pour déterminer, au moyen de l'unité d'antenne de portail (44), si un module de véhicule (4) accordé sur l'unité d'antenne de portail (44) se trouve à l'intérieur de la première zone d'avertissement de portail, et
a3) une interface de porte pour connecter le module de porte (40) à une commande de la porte; et avec
b) le module de véhicule (4), possédant
b1) une unité d'antenne de véhicule (12), comprenant au moins une première antenne de véhicule (6), laquelle est configurée pour être montée dans une relation spatiale prédéterminée sur le véhicule (2) et générer un deuxième champ électromagnétique tridimensionnel (16, 18, 20),
b2) une unité de traitement de véhicule (30) reliée à l'unité d'antenne de véhicule, laquelle est adaptée pour définir au moins une première zone d'avertissement de véhicule (22) pour le véhicule (2), qui représente une zone partielle du deuxième champ électromagnétique (16, 18, 20), l'unité de traitement de véhicule (30) étant adaptée pour déterminer, au moyen de l'unité d'antenne de véhicule (12), si le module de portail (40) accordé sur l'unité d'antenne de véhicule (12) se trouve à l'intérieur de la première zone d'avertissement de véhicule (22),
dans lequel l'unité de traitement de portail (46) est conçue pour envoyer une configuration de la première zone d'avertissement de portail au module de véhicule (4).

2. Système de sécurité de portail selon la revendication 1, dans lequel
un premier ensemble d'activités de portail comprenant au moins une première opération consécutive de portail et un deuxième ensemble d'activités de portail comprenant au moins une deuxième opération consécutive de portail sont associés à la première zone d'avertissement de portail (52), et dans lequel
un premier ensemble d'activités de véhicule comprenant au moins une première opération consécutive de véhicule et un deuxième ensemble d'activités de véhicule comprenant au moins une deuxième opération consécutive de véhicule sont associés à la première zone d'avertissement de véhicule (22).

3. Système de sécurité de portail selon la revendication 1 ou 2, dans lequel l'unité de traitement de portail (46) est adaptée pour recevoir un signal d'état par le biais de l'interface de portail et déterminer, au moyen du signal d'état reçu, si le portail (5) se trouve dans un état ouvert ou fermé.

4. Système de sécurité de portail selon les revendications 2 et 3, dans lequel l'unité de traitement de portail (46) est conçue pour sélectionner le premier ou le deuxième ensemble d'activités de portail en fonction de l'état déterminé.

5. Système de sécurité de portail selon l'une des revendications 3 ou 4 précédentes, dans lequel l'unité de traitement de portail (46) est configurée pour envoyer un signal de freinage au module de véhicule (4) en vue de freiner le véhicule (2), fournir à l'interface de portail un signal d'ouverture pour ouvrir le portail (5) et/ou envoyer une configuration de la première zone d'avertissement de portail au module de véhicule (4).

6. Système de sécurité de portail selon l'une quelconque des revendications précédentes, dans lequel l'unité de traitement de portail (46) étant adaptée pour définir une deuxième zone d'avertissement de portail pour le portail, qui représente une zone partielle du premier champ électromagnétique, dans lequel l'unité de traitement de portail (46) est adaptée pour déterminer, au moyen de l'unité d'antenne de portail (42), si le module de véhicule (4) se trouve à l'intérieur de la deuxième zone d'avertissement de portail, la deuxième zone d'avertissement de portail étant de préférence située à côté de la première zone d'avertissement de portail, sur un côté opposé du portail (5) ou en chevauchement partiel ou intégral avec la première zone d'avertissement de portail.

7. Système de sécurité de portail selon l'une quelconque des revendications précédentes, dans lequel l'unité de traitement de portail (46) est configurée pour déterminer un deuxième module de véhicule dans la première zone d'avertissement de portail et, en réponse à cela, envoyer un signal de freinage aux deux modules de véhicule afin de freiner les véhicules.

8. Système de sécurité de portail selon l'une quelconque des revendications précédentes, dans lequel l'unité de traitement de véhicule (30) est configurée pour générer la première zone d'avertissement de véhicule (22) de telle sorte qu'elle s'étende vers l'avant à partir d'un avant de véhicule au moins lors de la marche avant, l'unité de traitement de véhicule (32) étant de préférence configurée pour modifier la première zone d'avertissement de véhicule (22) en fonction d'au moins une vitesse du véhicule (2), et dans lequel la première zone d'avertissement de véhicule (22) est de préférence trapézoïdale dans une projection verticale et s'élargit vers l'avant dans le sens de la largeur du véhicule.

9. Système de sécurité de porte selon l'une quelconque des revendications précédentes, dans lequel l'unité de traitement de véhicule (32) est configurée pour envoyer un signal d'ouverture à l'unité de traitement de portail (46) en vue d'ouvrir le portail (5) lorsque l'unité de traitement de véhicule (32) détecte un module de portail (40) dans la première zone d'avertissement de véhicule (22).

10. Système de sécurité de portail selon l'une quelconque des revendications précédentes, dans lequel l'unité de traitement de véhicule (30) est configurée pour envoyer une configuration de la première zone d'avertissement de véhicule (22) au module de portail (40), le module de portail (40) étant en outre configuré pour, sur la base de la configuration reçue de la première zone d'avertissement de véhicule (22), déterminer une direction de déplacement du véhicule (2) par rapport au portail (5), le module de portail (40) étant de préférence configuré pour fournir un signal d'ouverture en vue d'ouvrir le portail (5) lorsqu'il est déterminé que le module de véhicule (4) se déplace vers le portail (5).

11. Procédé pour empêcher des collisions entre un véhicule (2) et un portail (5) par utilisation d'un système de sécurité de portail selon l'une quelconque des revendications précédentes, dans lequel le module de véhicule (4) est monté sur un véhicule (2), en particulier un chariot élévateur, et le module de portail (40) est monté de manière adjacente à une porte (5), en particulier une porte roulante d'un hall, comprenant les étapes consistant à:
- générer un premier champ électromagnétique tridimensionnel en utilisant l'unité d'antenne de portail (42);
- définir une première zone d'avertissement de portail pour le portail (5), qui représente une zone partielle du premier champ électromagnétique;
- générer un deuxième champ électromagnétique tridimensionnel en utilisant l'unité d'antenne de véhicule (12);
- définir une première zone d'avertissement de véhicule (22) pour le véhicule (2), qui représente une zone partielle du deuxième champ électromagnétique;
- déterminer si le module de véhicule (4) se trouve à l'intérieur de la première zone d'avertissement de portail en utilisant l'unité de traitement de portail (46);
- déterminer si le module de portail (40) est situé dans la première zone d'avertissement de véhicule (22) en utilisant l'unité de traitement de véhicule (30); et
- envoyer une configuration de la première zone d'avertissement de portail au module de véhicule (4) en utilisant l'unité de traitement de portail (46);
et comprenant de préférence les étapes consistant à:
- déterminer si un autre module de véhicule accordé sur l'unité d'antenne de portail (46), lequel est monté sur un autre véhicule, se trouve à l'intérieur de la première zone d'avertissement de portail, en utilisant l'unité de traitement de portail (46); et
- envoyer des signaux de freinage depuis l'unité de traitement de portail (46) au module de véhicule (30) et à l'autre module de véhicule;
- fournir un signal de freinage dérivé pour le véhicule (2) à une interface de véhicule (32) du module de véhicule (30) afin de freiner le véhicule (2), et fournir un signal de freinage dérivé pour l'autre véhicule à une interface de véhicule de l'autre module de véhicule afin de freiner l'autre véhicule.

12. Procédé selon la revendication 11, comprenant l'étape consistant à:
- déterminer si le module de véhicule (4) se déplace vers le portail (5) et comprenant de préférence les étapes consistant à:
- envoyer une configuration de la première zone d'avertissement de véhicule (22) à l'unité de traitement de portail (46); et
- déterminer, par utilisation d'une configuration de la première zone d'avertissement de portail, une direction de déplacement du véhicule (2) par rapport au portail (5).

13. Procédé selon la revendication 11 ou 12, comprenant les étapes consistant à:
- envoyer un signal d'ouverture depuis le module de véhicule (4) au module de portail (40) dans le cas où il est déterminé que le véhicule (2) se déplace vers le portail (5); et
- recevoir le signal d'ouverture au niveau du module de portail (40) et fournir un signal d'ouverture dérivé à une interface de portail du module de portail (40).

14. Procédé selon l'une quelconque des revendications 11 à 13, comprenant les étapes consistant à:
- envoyer un signal de freinage depuis le module de portail (40) au module de véhicule (4) dans le cas où il est déterminé que le véhicule (2) se déplace vers le portail (5); et
- recevoir le signal de freinage au niveau du module de véhicule (4) et fournir un signal de freinage dérivé à une interface de véhicule (32) du module de véhicule (4),
le signal de freinage étant de préférence envoyé jusqu'à ce que le portail (5) soit ouvert.

15. Programme d'ordinateur comprenant des instructions qui font à ce que le système de sécurité de portail selon la revendication 1 exécute les étapes de procédé selon la revendication 11.
